# EUROPEAN PATENT SPECIFICATION

(11) **EP 1 372 202 B1**
(45) Date of publication and mention of the grant of the patent: **06.11.2013**
(21) Application number: 02703970.0
(22) Date of filing: 12.03.2002
(51) Int. Cl.: C01G 45/12, C01G 53/00, H01M 4/505, H01M 4/525, H01M 4/02

(54) **POSITIVE ELECTRODE ACTIVE MATERIAL AND NONAQUEOUS ELECTROLYTE SECONDARY CELL COMPRISING THE SAME**
POSITIVELEKTRODEN-AKTIVMATERIAL UND DIESES ENTHALTENDE SEKUNDÄRZELLE MIT WASSERFREIEM ELEKTROLYT
MATIERE ACTIVE POUR ELECTRODE POSITIVE ET ACCUMULATEUR A ELECTROLYTE NON AQUEUX COMPORTANT LADITE MATIERE

(30) Priority: 14.03.2001 JP 2001071486; 21.03.2001 JP 2001080430; 21.03.2001 JP 2001080434
(43) Date of publication of application: 17.12.2003
(73) Proprietor: GS Yuasa International Ltd., Kisshoin Minami-ku Kyoto (JP)
(72) Inventor: OKABE, Kazuya, c/o Yuasa Corp., Takatsuki-shi, Osaka 569-1115 (JP); SHIOZAKI, Ryuji, c/o Yuasa Corp, Takatsuki-shi, Osaka 569-1115 (JP); FUJII, Akihiro, c/o Yuasa Corp., Takatsuki-shi, Osaka 569-1115 (JP); ITO, Akinori, c/o Yuasa Corp., Takatsuki-shi, Osaka 569-1115 (JP); YUFU, Hiroshi, c/o Yuasa Corp., Takatsuki-shi, Osaka 569-1115 (JP)
(74) Representative: Sturt, Clifford Mark
(86) International application number: PCT/JP2002/002284
(87) International publication number: WO 2002/073718

(56) References cited:
- EP-A- 0 806 397
- EP-A- 0 918 041
- EP-A1- 0 554 906
- JP-A- 5 242 891
- JP-A- 9 199 127
- JP-A- 2000 195 516
- JP-A- 2000 294 244
- JP-A- 2002 042 813

## Description

### <Technical Field>

The present invention relates to a positive active material and a non-aqueous electrolyte secondary battery using the same.

### <Background Art>

Non-aqueous electrolyte secondary batteries such as lithium secondary batteries are extensively used as power sources for small portable terminals, mobile communication apparatus, and the like because these batteries show a high energy density and have a high voltage. The positive active materials for lithium secondary batteries are required to stably retain their crystal structure even when subjected to repetitions of lithium insertion/elimination and to have a large electrochemical operating capacity. Known as ones having an operating voltage around 4 V are lithium-containing transition metal oxides basically constituted of a lithium-cobalt oxide or lithium-nickel oxide having a layer structure, a lithium-manganese oxide having a spinel structure, or the like.

Presently, composite oxides of lithium and a transition metal, such as LiCoO₂, LiNiO₂, LiMnO₂, and LiMn₂O₄, have hitherto been known as positive active materials for non-aqueous electrolyte secondary batteries having an operating voltage on the order of 4 V. Of the positive active materials having an α-NaFeO₂ structure, which are expected to attain a high energy density, the lithium-cobalt composite oxides represented by, e.g., LiCoO₂ are extensively used in lithium ion batteries and the like for public use. However, there has been a problem that cobalt is a scarce metal and costly. Furthermore, the lithium-nickel composite oxides represented by, e.g., LiNiO₂ have insufficient high-temperature stability and, hence, have not come to be practically used due to difficulties in securing safety, etc. The lithium-manganese oxides having a spinel structure which are represented by, e.g., LiMn₂O₄ are positive active materials which are inexpensive and highly safe, but attain an energy density per unit weight of as low as up to about 70% based on that attained with lithium-cobalt composite oxides. Although the lithium-manganese composite oxides have been put to practical use in some applications, they have not come to be widely used in public applications.

On the other hand, LiMnO₂ has been extensively investigated because a high capacity can theoretically be expected and the oxide is highly safe. Known crystal structures of the LiMnO₂ are the β-NaMnO₂-form rhombic structure, which is a zigzag layer structure, and the α-NaFeO₂-form monoclinic structure, which is a layer rock salt structure.

The LiMnO₂ of the rhombic structure is expected to attain a higher capacity than the LiMn₂O₄ mentioned above but comes to undergo a gradual transition to a spinel phase with repetitions of charge/discharge. The LiMnO₂ hence has had a problem that it has poor stability to charge/discharge cycles. Furthermore, the LiMnO₂ of the monoclinic structure has insufficient high-rate charge/discharge performance and undergoes a large capacity decrease with charge/discharge cycles; this is reported in, e.g., Chiang Y-M., Sadoway D.R., Jang, Y-I., Huang B., and Wang H., High-Capacity, Temperature-Stable Lithium Aluminum Manganese Oxide Cathodes for Rechargeable Batteries, Electrochem., Solid-State Lett., 2(3), 1999, 107-110.

For eliminating those problems, JP-A-2001-23617 discloses techniques for improving high-rate charge/discharge characteristics which comprise displacing the manganese in LiMnO₂ by aluminum, iron, cobalt, nickel, magnesium, or chromium in an amount of 1-y (0.5≦y≦1) and applying a voltage of from 4.0 V to 4.8 V between the positive electrode and negative electrode at 60 to 100°C to accelerate a change in crystal structure. However, even with these techniques, high-rate charge/discharge characteristics remained insufficient.

Furthermore, the lithium-manganese oxides have had many technical problems to be overcome for use thereof. In particular, there has been a problem that use of these oxides result in poor cycle performance and poor storage performance especially at high temperatures.

When LiNi_{1-α}Mn_{α}O₂ having a crystal structure belonging to the space group R3/m is to be obtained as a structure formed by displacing part of the nickel in LiNiO₂ by manganese, it is necessary to conduct calcining at 800°C or higher so as to introduce manganese into nickel sites without fail. However, there has been a problem that at such a high temperature, nickel or manganese comes into those sites in crystals which should be occupied by lithium and thereby disorders the crystal structure, resulting in a decrease in capacity or cycle performance. JP-A-8-171910 discloses techniques in which the value of α is regulated to 0.05 to 0.30 and calcining is conducted at 600°C to 800°C. However, even with these techniques, cycle performance remained insufficient.

Other techniques for eliminating those problems are known which relate to electrochemical properties of LiMnₐNi_{b}Co_{c}O₂ obtained by displacing part of the nickel in LiNiO₂ by manganese and cobalt. For example, in Japanese Patent No. 3,244,314 is reported a lithium composite oxide in which a, b, and c are in such ranges that 0.02≦a≦0.5, 0.02≦b/(b+c)≦0.9, b>0.34, and a+b+c=1. However, investigations made by the present inventors revealed that this technique has a problem that use of this composite oxide still results in poor thermal stability during charge. Although reasons for this have not been elucidated, it is presumed that since the lithium composite oxide in the report is produced through mechanical mixing of solids, the diffusion of metallic elements in a later calcining step is insufficient to cause local phase separation, resulting in poor thermal stability. That technique further has the following problem. Excessive pulverization of raw materials results in a lithium composite oxide made up of fine particles. When this composite oxide is used as a positive electrode to fabricate a battery, this battery undergoes side reactions such as oxidative decomposition of the electrolyte because the positive electrode is in contact with the electrolyte in a wide area. As a result, the battery is apt to deteriorate with time.

Likewise, a report on LiCo_{0.33}Ni_{0.33}Mn_{0.33}O₂ composition among LiMnₐNi_{b}Co_{c}O₂ compositions is made in Yoshinari Makimura, Naoaki Yabuuchi, Tsutomu Ohzuku, Yukinori Kayama, Isao Tanaka, and Hirohiko Adachi, Lithium Insertion Material of LiCo1/3Ni1/3Mn1/3O2 for Advanced Batteries; (II) Synthesis and Characterization as a Possible Alterative to LiCoO2 The 42th Battery Symposium in Japan, 2I18, 2I19(2001). This lithium composite oxide is produced by adding an alkali to an aqueous solution of manganese, nickel, and cobalt to cause precipitation, mixing the resultant coprecipitated compound with a lithium compound, and then heat-treating the mixture.

However, the report has had a problem that properties of the lithium composite oxide obtained are not specified therein. Since the lattice volume of this kind of lithium composite oxide decreases upon charge and increases upon discharge, the rate of lithium incorporation into the active material during discharge is significantly lower than the rate of lithium abstraction during charge. Consequently, a battery having sufficient discharge performance cannot be obtained, as long as the utmost care is not taken for the factors highly influencing the rate of lithium incorporation into the positive electrode, such as, e.g., the state of interfacial contact between the active material and the electrolyte. Therefore, in practically using a battery employing that active material as the positive electrode, it is essential to regulate those properties of the active material which govern the factors.

With respect to expressions of space groups, the expression "R3m" should originally bear a bar (lateral line) affixed over the numeral "3". In this description, however, the expression "R3/m" is used for convenience so as to show the same meaning.

EPP0806397 provides a novel lithium nickel complex oxide represented by the general formula: Li_{y-x1}Ni₁₋ₓ₂MₓO₂ (wherein M represents one selected from the group consisting of Al, Fe, Co, Mn and Mg, x = x₁ + x₂, 0 < x₁ ≦ 0.2, 0 < x₂ ≦ 0.5, 0 < x ≦ 0.5, and 0.9 ≦ y ≦ 1.3), wherein the crystals have been sufficiently developed and are highly purified, and a positive electrode active material for a secondary battery.

An object of the invention, which has been achieved in order to eliminate the problems described above, is to provide a positive active material capable of giving a non-aqueous electrolyte secondary battery which is excellent in high-rate charge/discharge performance and charge/discharge cycle performance, is highly safe, and has a high energy density. Another object is to provide a non-aqueous electrolyte secondary battery excellent in high-rate charge/discharge performance and charge/discharge cycle performance and having a high energy density.

### Disclosure of the Invention

The present inventors made intensive investigations in order to eliminate the problems described above. As a result, they have surprisingly found that when a positive active material having a specific structure is regulated so as to have specific properties, then a non-aqueous electrolyte secondary battery having excellent battery characteristics is obtained. The invention has been thus achieved. Namely, the technical constitutions of the invention and the effects and advantages thereof are as follows. It is, however, noted that the explanations on the mechanisms of the effects include presumptions and whether the mechanisms of the effects are correct or not does not limit the scope of the invention.

According to a first aspect of the present invention, there is provided a positive active material as defined in claim 1.

The present inventors directed attention to LiMnO₂, which is expected to attain a high capacity, and then selected nickel as an element for displacing manganese because nickel readily forms a solid solution in manganese and is expected to attain an operating voltage centering at around 4 V. As a result, it was ascertained that LiMn_{0.5}Ni_{0.5}O₂, having a displacement amount of 50%, gives a battery which has an operating voltage of from 4.3 V to 3.0 V and hence has excellent interchangeability with lithium ion batteries heretofore in use and which has a discharge capacity as high as 140 mAh/g. However, this battery had insufficient charge/discharge cycle performance. It was presumed that manganese gradually dissolves away from the positive active material with repetitions of charge/discharge and this manganese dissolution leads to an increase in electrode surface resistance, resulting in the insufficient charge/discharge cycle performance.

The inventors hence made intensive investigations on the relationship between charge/discharge cycle performance and each of LiMn_{0.5}Ni_{0.5}O₂ having various properties and ones obtained by displacing part of the nickel and manganese among the elements constituting LiMn_{0.5}Ni_{0.5}O₂ by one or more other elements (hereinafter, these oxides are collectively referred to also as Li-Mn-Ni composite oxides). As a result, it has been surprisingly found that when such a composite oxide is regulated so as to have a specific surface area within a specific range, exceedingly stable charge/discharge cycle performance is obtained. Namely, it has been found that excellent charge/discharge cycle performance is obtained by regulating the value of specific surface area to 1.5 m²/g or smaller.

Although this effect has not been fully elucidated, the following is thought. Due to the decrease in specific surface area, the Li-Mn-Ni composite oxide as a positive active material has come to be in contact with the electrolyte in a reduced area and, hence, the electrolyte is inhibited from suffering oxidative decomposition. In addition, since the amount of water slightly adsorbed on the surface of the particles of the positive active material has decreased according to the decrease in specific surface area, the amount of hydrofluoric acid (HF) which generates within the battery due to the presence of water is reduced. Consequently, the manganese-dissolving reaction caused by the acid has become less apt to occur.

Furthermore, regulating the value of specific surface area to 0.3 m²/g or larger was found to be effective in maintaining a high discharge capacity even in high-rate discharge at 2 It (0.5 hour rate).

The inventors further made intensive investigations on, among Li-Mn-Ni composite oxides, ones in which part of the nickel and manganese among the elements constituting LiMn_{0.5}Ni_{0.5}O₂ had been displaced by one or more elements of different kinds. As a result, it has been surprisingly found that displacement by specific kinds of elements as the elements of different kinds is effective in further greatly improving the high-rate discharge characteristics.

This effect has not been fully elucidated, but the following is thought. Since the elements of different kinds differ from manganese and nickel elements in atomic radius, i.e., size, they influenced the layer structure constituting the positive active material and influenced lithium ion movement passages to thereby bring about the effect of making ionic conductivity satisfactory. It is further thought that since the elements other than manganese and nickel differ in atomic radius, i.e., size, the presence of an element having a different size functioned to diminish the expansion/contraction strain of the active material crystals caused by charge/discharge.

Moreover, that the surface composition in particular has a close relation is thought to be related with the fact that lithium ion transfer occurs at the interface between the positive active material particles and the electrolyte.

The inventors furthermore made intensive investigations on calcining conditions in synthesizing LiMn_{0.5}Ni_{0.5}O₂ and on the kinds and proportions of metal elements to be added other than lithium, manganese, and nickel. As a result, it has been found that even when composite oxides having the same composition are used, the crystals obtained considerably differ in structure depending on calcining conditions, and that some crystal forms can greatly improve charge/discharge cycle performance. Specifically, it was ascertained that when the Li-Mn-Ni composite oxide has a layer crystal structure which has peaks at 2θ's of 18.6±1°, 36.6±1°, 37.8±1°, 38.2±1°, 44.1±1°, 48.4±1°, 58.4±1°, 64.2±1°, 64.8±1°, and 68.8±1° upon analysis by X-ray powder diffractometry with CuK_{α} ray, then excellent cycle performance is obtained. Although this effect has not been fully elucidated, it is thought that crystals showing that X-ray powder diffraction pattern are reduced in strain and the structure itself of these crystals is stable. It is further thought that addition of, in particular, cobalt is effective in further stabilizing the structure and, hence, the reaction for lithium abstraction from the crystal structure is apt to proceed at a less noble potential, resulting in an improvement in charge/discharge capacity.

The inventors have further found that calcining at a temperature of 850°C and calcining at a temperature of 1,000°C give considerably different crystal structures even when the components are the same, resulting in considerably different potential change curves in charge/discharge. In particular, high-rate discharge performance is influenced by even a slight change in calcining temperature or calcining period.

From those facts, the inventors thought that calcining conditions influence the crystal structure of the active material. They made intensive studies while directing attention to the intensity of the diffraction peak at 2θ=44.1±1° relative to that of the diffraction peak at 2θ=18.6±1° in diffraction patterns for calcined powders in X-ray powder diffractometry with CuK_{α} ray. As a result, it has been surprisingly found that when a lithium-manganese-nickel composite oxide in which that relative intensity is 1.1 or lower is used as a positive active material, high-rate discharge characteristics are especially improved.

Although this effect has not been fully elucidated, it is thought that values of that relative intensity not higher than 1.1 have made the movement of lithium ions in the solid especially easy. However, in case where the relative intensity is lower than 0.6, the movement of lithium ions in the solid is inhibited due to poor crystal growth and this tends to result in reduced charge/discharge cycle performance. Consequently, by using a positive active material in which that relative intensity has been regulated to 0.6 to 1.1, a non-aqueous electrolyte secondary battery combining satisfactory high-rate discharge performance and satisfactory charge/discharge cycle performance can be provided.

The half widths at 2θ=18.6±1° and 2θ=44.1±1° reflect the growth and crystallite diameter of the positive active material crystals to be used in the battery of the invention. It may be thought that the larger the half width, the smaller the crystallite diameter. However, it has been surprisingly ascertained that highly excellent high-rate discharge characteristics and charge/discharge cycle performance are obtained when the half width of the diffraction peak at 2θ=18.6±1° is from 0.13° to 0.20° and the half width of the diffraction peak at 2θ=44.1±1° is from 0.10° to 0.17°.

This effect has not been fully elucidated, but the following is thought. When the half width of the diffraction peak at 2θ=18.6±1° is 0.20° or smaller and the half width of the diffraction peak at 2θ=44.1±1° is 0.17° or smaller, then lithium ion movement in the crystals is easy and high-rate discharge characteristics are improved. In this case, however, the crystals have impaired stability and, hence, charge/discharge cycle performance is reduced. Because of this, when the half width of the diffraction peak at 2θ=18.6±1° is 0.13° or larger and the half width of the diffraction peak at 2θ=44.1±1° is 0.10° or larger, then moderate lithium ion movement in the crystals and sufficient crystal stability are obtained. Thus, it has become possible to attain both of excellent high-rate discharge characteristics and charge/discharge cycle performance.

### <Brief Description of the Drawings>

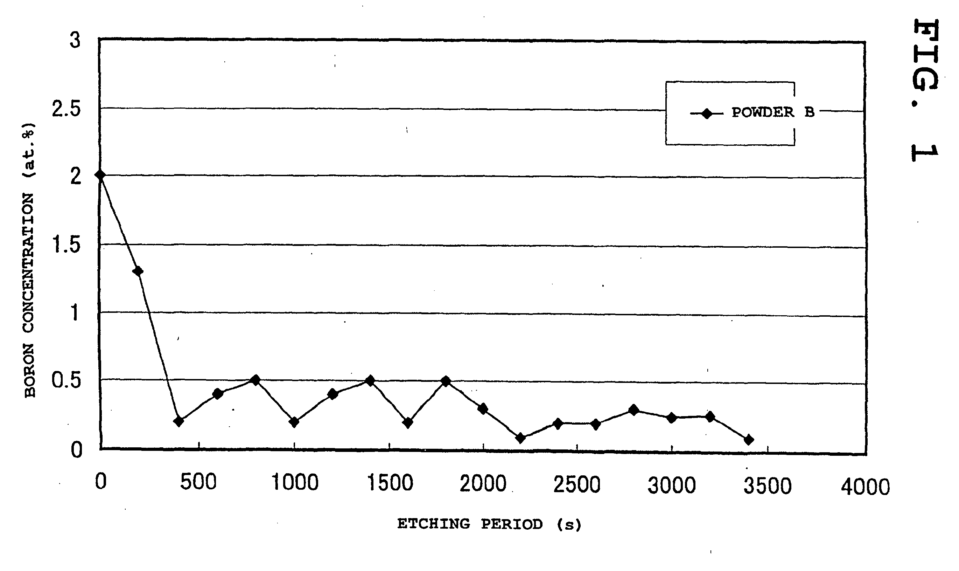

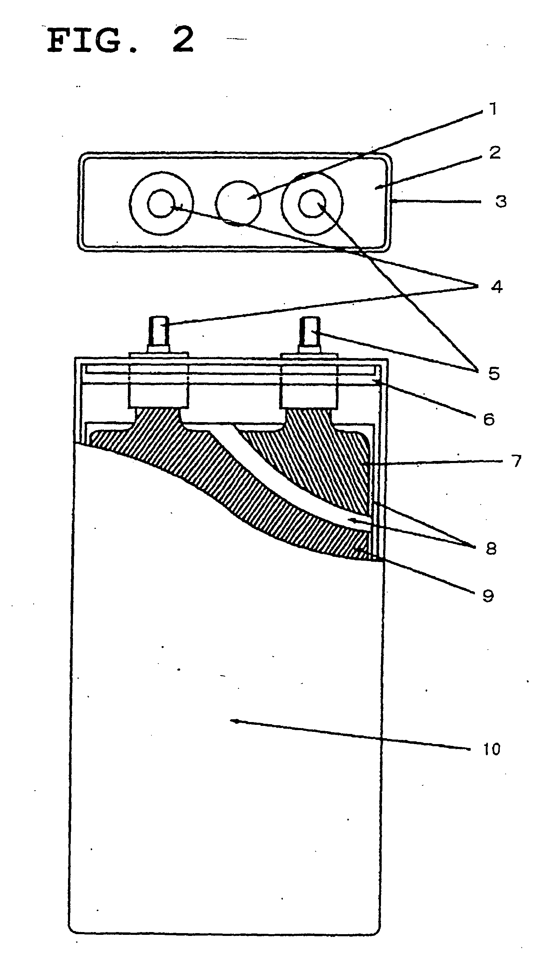

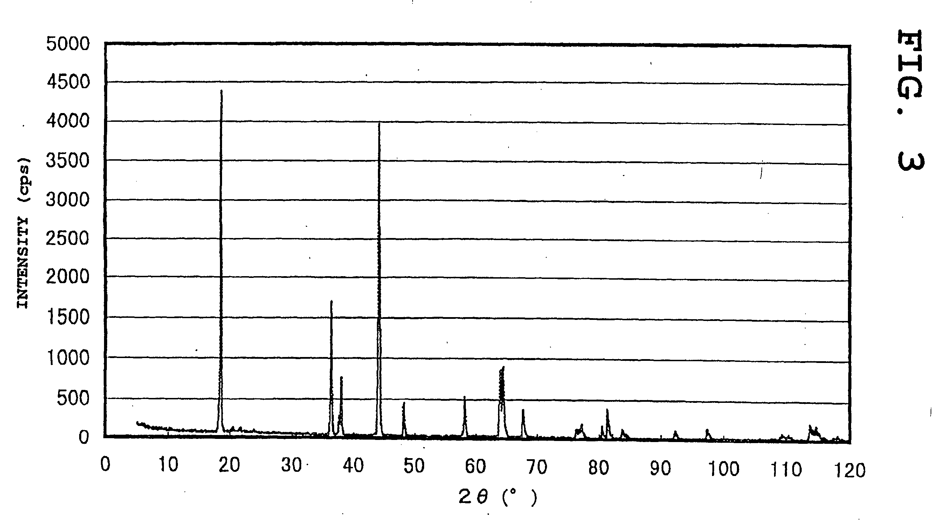

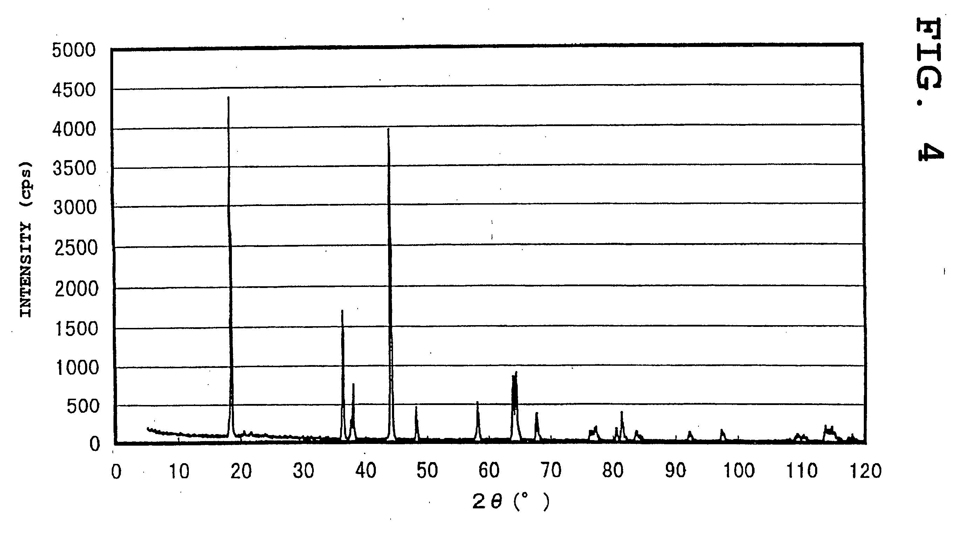

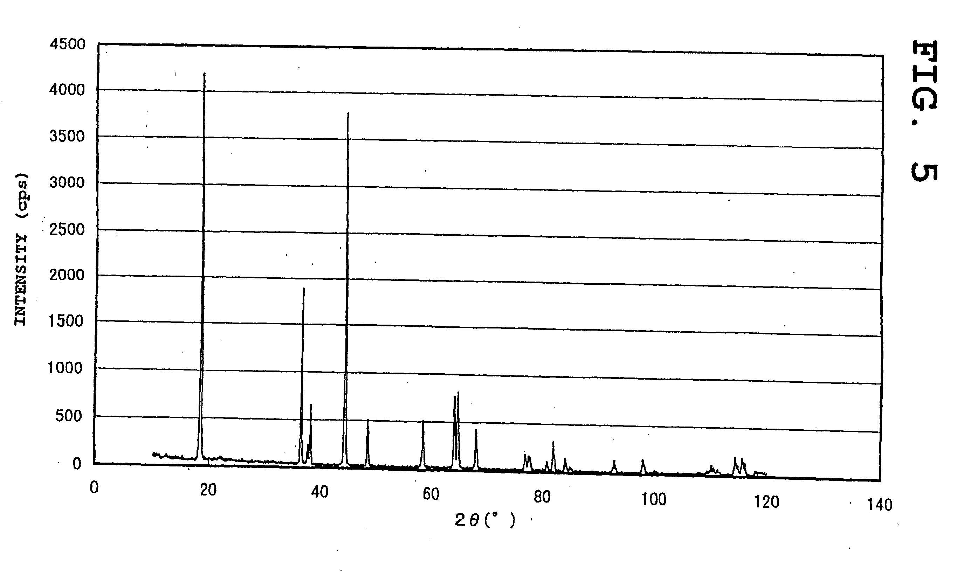

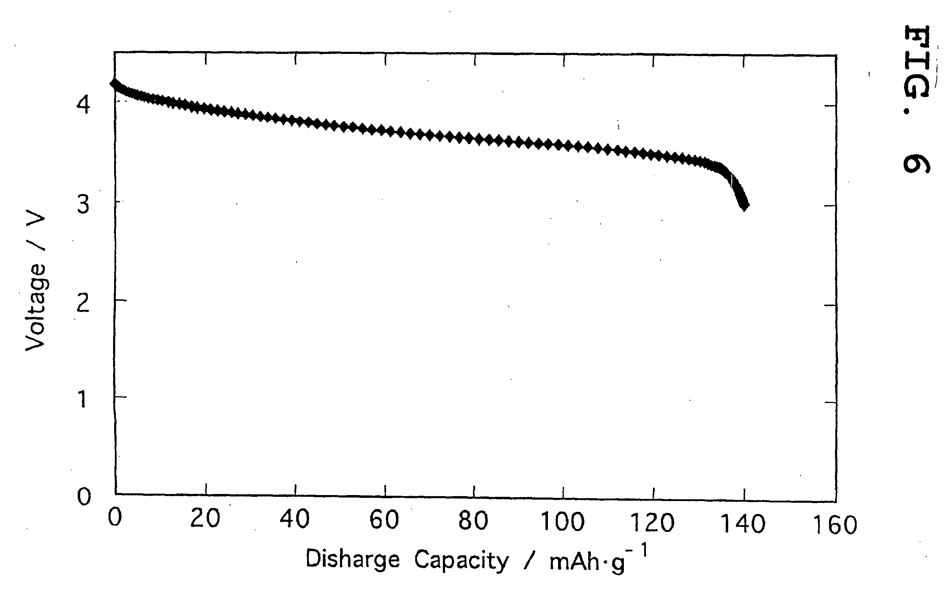

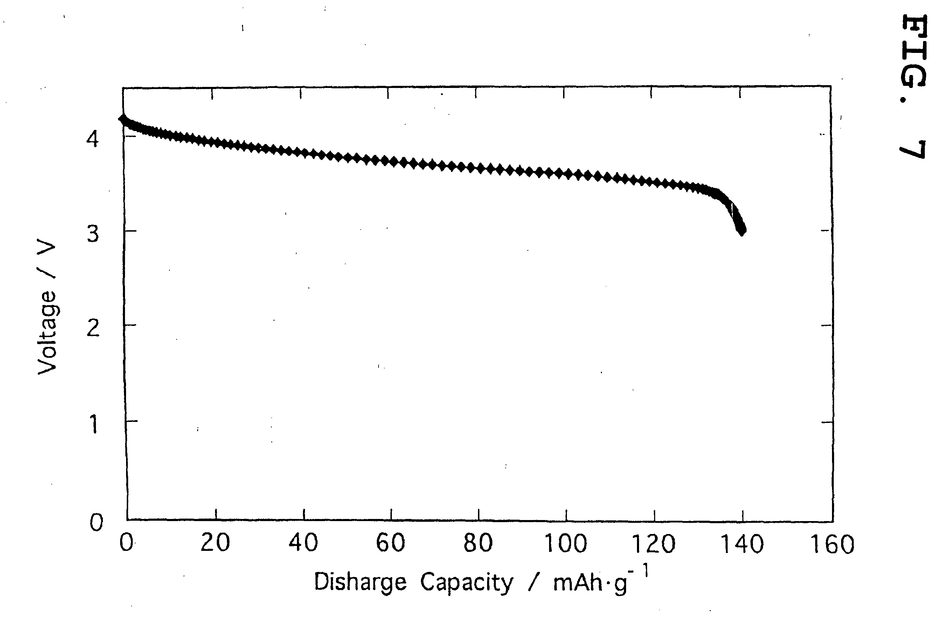

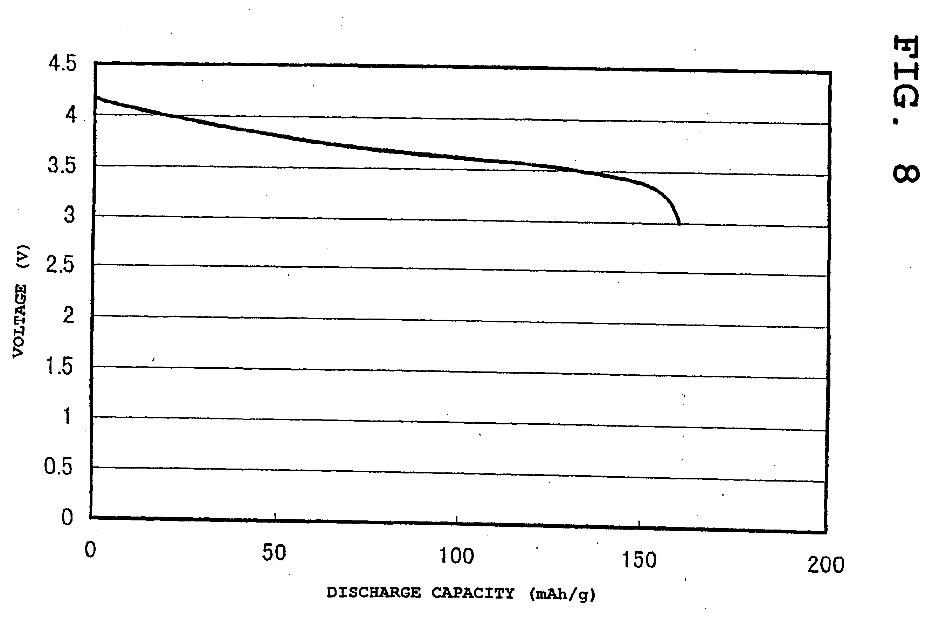

Fig. 1 is a presentation showing the results of analysis by X-ray photoelectron spectroscopy (XPS) of a positive active material used in the invention; Fig. 2 is a partly sectional view of the batteries of Examples and Comparative Examples; Fig. 3 is an X-ray diffraction pattern of the positive active material of Example 1-1; Fig. 4 is an X-ray diffraction pattern of the positive active material of Example 1-10; Fig. 5 is an X-ray diffraction pattern of the positive active material of Example 4-1; Fig. 6 is a presentation showing the discharge performance of the battery of Example 1-1; Fig. 7 is a presentation showing the discharge performance of the battery of Example 1-10; and Fig. 8 is a presentation showing the discharge performance of the battery of Example 4-1.

In the drawings, reference numeral 1 denotes a safety vent, 2 a cap, 3 a laser-welded part, 4 a negative terminal, 5 a positive terminal, 6 a gasket, 7 a positive electrode plate, 8 a separator, 9 a negative electrode plate, and 10 a battery case.

### <Best Mode for Carrying Out the Invention>

Modes for carrying out the invention will be shown below as examples, but the invention should not be construed as being limited to the following modes.

Only Examples 2-1 to 2-10, 3-1 to 3-10, 4-1 to 4-4 and 4-5 to 4-13 form part of the claimed invention. Examples 1-1 to 1-11 and the Comparative Examples are provided as background art only.

The positive active material according to the invention comprises an Li-Mn-Ni composite oxide as the main component, and is characterized in that the Li-Mn-Ni composite oxide has a specific surface area as measured by the BET method (hereinafter often referred to simply as specific surface area) of from 0.3 m²/g to 1.5 m²/g. By regulating the specific surface area thereof to 1.5 m²/g or smaller, a non-aqueous electrolyte secondary battery (hereinafter often referred to simply as battery) having excellent charge/discharge cycle performance can be obtained. By regulating the specific surface area thereof to 0.3 m²/g or larger, a battery having excellent high-rate charge/discharge performance can be obtained.

The term Li-Mn-Ni composite oxide as used herein means a composite oxide comprising at least lithium (Li), manganese (Mn), nickel (Ni), and oxygen (O) as constituent elements.

Preferred embodiments of the Li-Mn-Ni composite oxide in the invention will be explained below. However, the Li-Mn-Ni composite oxide should not be construed as being limited to the embodiments shown below.

In the first general formula of claim 1, since x+x'+y+y'≦0.4, the crystal structure of the composite oxide is stable even in repetitions of charge/discharge. Thus, excellent charge/discharge cycle performance is attained.

According to claim 2, since x+x'+y+y'≦0.2, the crystal structure of the composite oxide is especially stable even in repetitions of charge/discharge. Thus, even higher charge/discharge cycle performance is attained.

The element M of a different kind is selected from the group B, Mg, Al, Ti, V, Cr, Fe, Co, Cu, and Zn. This is because use of any of these produces an especially remarkable effect on high-rate discharge performance.

In this composite oxide, x and y, which indicate the manganese displacement amount, are such that 0<x+y≦0.2, and x' and y', which indicate the nickel displacement amount, are such that 0<x'+y'≦0.2. This is because an increase in the manganese displacement amount x+y and in the nickel displacement amount x'+y' results in a decrease in the amount of reversibly usable lithium.

Symbol z indicates the amount of reversibly usable lithium. The larger the amount of the element of a different kind relative to the amounts of the manganese and nickel, the smaller the value of z.

In that formula, the lithium corresponding to the part shown by Li_{y+y'} indicates proportions in the formula. It neither shows the configuration of lithium element in the basic framework of LiMn_{0.5}Ni_{0.5}O₂ nor shows whether lithium has displaced part of the elements constituting the basic framework.

High-rate discharge performance improves as the amount of the element of a different kind relative to the amounts of the manganese and nickel increases, as long as 0<x'+y'≦0.2 and 0<x+y≦0.2. Symbols x and x' each are preferably 0.001 or larger, especially preferably 0.01 or larger.

In the above Li-Mn-Ni composite oxide, examples of methods for displacing part of the manganese and nickel by lithium or an element of a different kind include: a method in which an element to displace is added beforehand to calcining materials for an active material; a method in which LiMn_{0.5}Ni_{0.5}O₂ is produced through calcining and thereafter an element of a different kind is caused to displace by, e.g., ion exchange; and the like. However, usable methods should not be construed as being limited to these examples.

In the second general formula of claim 1, values of c smaller than 0.2 are undesirable because cycle performance tends to become poor. Values of c larger than 0.5 are undesirable because not only cycle performance tends to become poor but also impurities such as Li₂MnO₃ are apt to stably generate even at relatively low temperatures during raw-material calcining. When e is larger than 0.4, thermal stability during charge tends to decrease. When a is larger than 0.05, discharge capacity tends to decrease. When b is larger than 0.05, discharge capacity tends to decrease.

For the purpose of improving high-rate charge/discharge characteristics, investigations were further made in which the proportions of constituent elements were intentionally changed. As a result, it has been surprisingly found that addition of a specific element of a different kind is effective in further greatly improving high-rate discharge characteristics.

The element M" of a different kind is selected from the group B, Mg, Al, Ti, V, Cr, Fe, Cu, and Zn. This is because use of any of these produces an especially remarkable effect on high-rate discharge performance.

Although this effect has not been fully elucidated, the following is thought. Since those elements of different kinds differ from manganese and nickel elements in size, they influence the layer structure constituting the positive active material and influence lithium ion movement passages to thereby bring about the effect of making ionic conductivity satisfactory.

It is further thought that since the elements other than manganese and nickel differ in atomic radius, i.e., size, the presence of an element having a different size functioned to diminish the expansion/contraction strain of the active material crystals caused by charge/discharge.

In the Li-Mn-Ni composite oxide above, examples of methods for incorporating any of those elements of different kinds into the composite oxide include: a method in which the element to displace is added to calcining materials beforehand; a method in which, after calcining, the element of a different kind is caused to displace by, e.g., ion exchange; and the like. However, usable methods should not be construed as being limited to these examples.

Although embodiments of the Li-Mn-Ni composite oxide were shown above, the Li-Mn-Ni composite oxide brings about excellent cycle performance because the oxide, in X-ray powder diffractometry with CuKα ray, gives a diffraction pattern having peaks at 2θ's of 18.6±1°, 36.6±1°, 37.8±1°, 38.2±1°, 44.1±1°, 48.4±1°, 58.4±1°, 64.2±1°, 64.8±1°, and 68.8±1°.

As stated hereinabove, the Li-Mn-Ni composite oxide is one which, in X-ray powder diffractometry with CuK_{α} ray, gives a diffraction pattern which has diffraction peaks at 2θ=18.6±1° and 2θ=44.1.±1° a and preferably in which the ratio of the relative intensity of the diffraction peak at 2θ=44.1±1° to the relative intensity of the diffraction peak at 2θ=18.6±1° is from 0.6 to 1.1 Furthermore, the composite oxide is one in which the half width of the diffraction peak at 2θ=18.6±1° is from 0.13° to 0.20° and the half width of the diffraction peak at 2θ=44.1±1° is from 0.10° to 0.17°.

The smaller the particle diameter of the Li-Mn-Ni composite oxide, the easier the enhancement of output characteristics because of the increased specific surface area. However, the average particle diameter (D₅₀) is preferably from 3 µm to 30 µm, especially preferably from 5 µm to 20 µm, in order to prevent other properties, especially storage performance, from decreasing and from the standpoint of applicability in electrode production. As long as the average particle diameter of the composite oxide is within this range, it is not particularly limited because it does not exert a considerable influence on the storage performance or charge/discharge cycle performance of the battery. This is because that particle diameter is not the particle diameter of the primary particles of the crystals but the particle diameter of the secondary particles thereof. In this connection, the positive active materials used in the Examples which will be given later each had an average particle diameter of from 9 to 20 µm.

Preferred examples of processes for producing the Li-Mn-Ni composite oxide will be shown below.

The Li-Mn-Ni composite oxide preferably has a heat history including calcining at a temperature of 900°C or higher. More specifically, it is preferred to produce an Li-Mn-Ni composite oxide by calcining "an Li-Mn-Ni composite oxide precursor comprising at least a lithium ingredient, a manganese ingredient, and a nickel ingredient" at a temperature of 900°C or higher. The temperature of this calcining is preferably from 900°C to 1,100°C, especially preferably from 950°C to 1,025°C.

In case where the calcining temperature is lower than 900°C, it is difficult to obtain an Li-Mn-Ni composite oxide having a specific surface area of 1.5 m²/g or smaller and a battery having poor cycle performance is apt to be obtained.

On the other hand, in case where the calcining temperature exceeds 1,100°C, problems are apt to arise, such as a problem concerning production that lithium volatilization occurs to make it difficult to obtain a composite oxide having a target composition and a problem that particle densification occurs to reduce battery performance. These problems are attributable to the fact that temperatures higher than 1,100°C increase the rate of growth of primary particles to give composite oxide crystals having too large a particle size. It is further thought that the amount of lithium-deficient sites increases locally and the resultant structural instability also is causative of those problems.

The calcining period preferably is from 3 hours to 50 hours. In case where the calcining period exceeds 50 hours, it is difficult to obtain an Li-Mn-Ni composite oxide having a specific surface area of 0.3 m²/g or larger and a battery having poor high-rate charge/discharge performance is apt to be obtained. In case where the calcining period is shorter than 3 hours, it is difficult to obtain an Li-Mn-Ni composite oxide having a specific surface area of 1.5 m²/g or smaller and a battery having poor cycle performance is apt to be obtained.

Although preferred ranges of the calcining temperature and calcining period were shown above, the temperature and period are suitably selected so that the composite oxide to be obtained has a specific surface area within the range specified in the invention.

The Li-Mn-Ni composite oxide precursor is preferably produced through "a coprecipitation step in which an alkali compound is added to either an aqueous solution prepared by dissolving a manganese (Mn) compound and a nickel (Ni) compound in water or an aqueous solution prepared by dissolving an Mn compound, an Ni compound, and "a compound having an element of a different kind" (a compound containing the element M, M', or M" of a different kind described above; hereinafter sometimes referred to also as [M] compound) in water to obtain a coprecipitated Mn-Ni composite or coprecipitated Mn-Ni-[M] composite".

Preferred examples of the nickel compound include nickel hydroxide, nickel carbonate, nickel sulfate, and nickel nitrate. Preferred examples of the manganese compound include manganese oxide, manganese carbonate, manganese sulfate, and manganese nitrate.

Examples of the [M] compound are as follows. When the element of a different kind is boron, examples of the compound include boric acid. When the element of a different kind is vanadium, examples of the compound include vanadium oxide. When the element of a different kind is aluminum, examples of the compound include aluminum nitrate. When the element of a different kind is magnesium, examples of the compound include magnesium nitrate. When the element of a different kind is cobalt, examples of the compound include cobalt hydroxide, cobalt carbonate, cobalt oxide, cobalt sulfate, and cobalt nitrate. When the element of a different kind is chromium, examples of the compound include chromium nitrate. When the element of a different kind is titanium, examples of the compound include titanium oxide. When the element of a different kind is iron, examples of the compound include iron sulfate and iron nitrate. When the element of a different kind is copper, examples of the compound include copper sulfate and copper nitrate. When the element of a different kind is zinc, examples of the compound include zinc sulfate and zinc nitrate.

Examples of the alkali compound include ammonium hydroxide and sodium hydroxide. It is preferred to add the alkali compound in the form of an aqueous solution.

A mixture of the coprecipitated Mn-Ni composite or coprecipitated Mn-Ni-[M] composite (hereinafter, these composites are often inclusively referred to simply as "coprecipitated composite") obtained through the coprecipitation step described above and a lithium compound is used as an Li-Mn-Ni composite oxide precursor. This Li-Mn-Ni composite oxide precursor is calcined under the calcining conditions described above, whereby an Li-Mn-Ni composite oxide can be advantageously produced.

Preferred examples of the Li-Mn-Ni composite oxide precursor include a mixture obtained from an aqueous solution of both the coprecipitated composite and a lithium compound by vaporizing the water and drying the residue.

Examples of the lithium compound include lithium hydroxide and lithium carbonate.

The positive active material of the invention may be a mixture of the Li-Mn-Ni composite oxide described above, as the main component, and one or more other compounds. For example, when a mixture of the composite oxide and one or more other lithium-containing transition metal oxides or the like is used, there are cases where high cycle performance is obtained.

Those lithium-containing transition metal oxides may be ones represented by the general formulae LiₓMX₂ and LiₓMN_{y}X₂ (wherein M and N represent a metal in Groups I to VIII, and X represents a chalcogen compound such as oxygen or sulfur). Examples thereof include Li_{y}Co₁₋ₓMₓO₂ and Li_{y}Nm₂ₓMₓO₄. (Examples of M include metals in Groups I to VIII (e.g., at least one element selected from Li, Ca, Cr, Ni, Fe, and Co). In the lithium-containing transition metal oxides, the value of x, which indicates the displacement amount of the element of a different kind, may be any value up to one corresponding to the maximum displacement possible. Although all such values are effective, x is preferably in the range of 0≦x≦1 from the standpoint of discharge capacity. With respect to the value of y, which indicates lithium amount, the maximum amount in which lithium can be reversibly utilized is effective. However, y is preferably in the range of 0≦y≦1 from the standpoint of discharge capacity.) However, the transition metal oxides should not be construed as being limited to these examples.

Examples of those other compounds further include compounds of a Group I metal, such as CuO, Cu₂O, Ag₂O, CuS, and CuSO₄, compounds of a Group IV metal, such as TiS₂, SiO₂, and SnO, compounds of a Group V metal, such as V₂O₅, V₆O₁₂, VOₓ, Nb₂O₅, Bi₂O₃, and Sb₂O₃, compounds of a Group VI metal, such as CrO₃, Cr₂O₃, MoO₃, MoS₂, WO₃, and SeO₂, compounds of a Group VII metal, such as MnO₂ and Mn₂O₃, compounds of a Group VIII metal, such as Fe₂O₃, FeO, Fe₃O₄, Ni₂O₃, NiO, CoO₃, and CoO, metal compounds such as, e.g., lithium-cobalt composite oxides and lithium-manganese composite oxides, conductive polymeric compounds such as disulfides, polypyrrole, polyaniline, poly-p-phenylene, polyacetylene, and polyacene materials, and carbonaceous materials of the pseudo-graphite structure. However, the optionally usable compounds should not be construed as being limited to these examples.

In the case where a combination of the Li-Mn-Ni composite oxide and one or more other compounds such as those mentioned above is used as the positive active material, the proportion of these optional compounds is not particularly limited as long as the incorporation thereof does not impair the effects of the invention. However, the proportion of such optional ingredients is generally from 1% by weight to 50% by weight, preferably from 5% by weight to 30% by weight, based on the whole positive active material.

The non-aqueous electrolyte secondary battery of the invention will be explained next. The non-aqueous electrolyte secondary battery (hereinafter often referred to simply as battery) of the invention is a battery using the positive active material of the invention. This battery is generally constituted of: a positive electrode comprising the positive active material of the invention as a major component; a negative electrode comprising a negative-electrode material as a major component; and a non-aqueous electrolyte comprising a non-aqueous solvent containing an electrolyte salt. Usually, a separator is disposed between the positive electrode and the negative electrode.

The non-aqueous electrolyte can generally be any of ones proposed for use in lithium batteries or the like. Examples of the non-aqueous solvent include cyclic carbonic esters such as propylene carbonate, ethylene carbonate, butylene carbonate, chloroethylene carbonate, and vinylene carbonate; cyclic esters such as γ-butyrolactone and γ-valerolactone; chain carbonates such as dimethyl carbonate, diethyl carbonate, and ethyl methyl carbonate; chain esters such as methyl formate, methyl acetate, and methyl butyrate; tetrahydrofuran or derivatives thereof; ethers such as 1,3-dioxane, 1,4-dioxane, 1,2-dimethoxyethane, 1,4-dibutoxyethane, and methyldiglyme; nitriles such as acetonitrile and benzonitrile; dioxolane or derivatives thereof; and ethylene sulfide, sulfolane, sultones, or derivatives thereof. These may be used alone or as a mixture of two or more thereof. However, the non-aqueous solvent should not be construed as being limited to these examples.

Examples of the electrolyte salt include inorganic ion salts containing one of lithium (Li), sodium (Na), and potassium (K), such as LiClO₄, LiBF₄, LiAsF₆, LiPF₆, LiSCN, LiBr, LiI, Li₂SO₄, Li₂B₁₀Cl₁₀, NaClO₄, NaI, NaSCN, NaBr, KClO₄, and KSCN; and organic ion salts such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC (C₂F₅SO₂)₃, (CH₃)₄NBF₄,(CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearylsulfonate, lithium octylsulfonate, and lithium dodecylbenzenesulfonate. These ionic compounds can be used alone or as a mixture of two or more thereof.

Furthermore, a mixture of LiBF₄ and a lithium salt having a perfluoroalkyl group, such as LiN(C₂F₅SO₂)₂, is more desirable because use of this mixture can reduce the viscosity of the non-aqueous electrolyte and hence further enhance low-temperature characteristics.

The concentration of the electrolyte salt in the non-aqueous electrolyte is preferably from 0.1 mol/l to 5 mol/l, more preferably from 1 mol/l to 2.5 mol/l, from the standpoint of obtaining a battery having high battery characteristics without fail.

In the battery of the invention, an electrode constituted of an Li-Mn-Ni composite oxide according to the invention and an electrode constituted of a graphite are preferably used as the positive electrode and negative electrode, respectively.

The positive electrode is produced by kneading the composite oxide according to the invention together with a conductive material and a binder and optionally with a filler to obtain a positive composite, subsequently applying or press-bonding this positive composite to a foil, lath plate, or the like serving as a current corrector, and heat-treating the resultant structure at a temperature of about from 50°C to 250°C for about 2 hours.

Examples of the negative-electrode material include lithium metal and lithium alloys (lithium metal-containing alloys such as lithium-aluminum, lithium-lead, lithium-tin, lithium-aluminum-tin, lithium-gallium, and Wood's metal), and further include alloys capable of occluding/releasing lithium and carbonaceous materials (e.g., graphites, hard carbon, low-temperature-calcined carbon, and amorphous carbon). Preferred of these for use as a negative-electrode material are graphites because graphites have an operating potential very close to that of metallic lithium and are hence effective in diminishing self-discharge and reducing the irreversible capacity in charge/discharge in the case of employing a lithium salt as an electrolyte salt. For example, artificial graphite and natural graphite are preferred. In particular, graphite negative active material particles whose surface has been modified with, e.g., amorphous carbon are desirable because gas generation therefrom during charge is little.

Results of analysis by X-ray diffractometry of graphites which can be advantageously used are shown below. Lattice spacing (d₀₀₂): 0.333-0.350 nm Crystallite size in a-axis direction, La: 20 nm or larger Crystallite size in c-axis direction, Lc: 20 nm or larger True density: 2.00-2.25 g/cm³

It is also possible to modify a graphite by adding thereto a metal oxide, e.g., tin oxide or silicon oxide, phosphorus, boron, amorphous carbon, or the like. In particular, modifying the surface of a graphite by the method described above is desirable because this modification can inhibit electrolyte decomposition and thereby heighten battery characteristics. Furthermore, a combination of a graphite and either lithium metal or a lithium metal-containing alloy, such as lithium-aluminum, lithium-lead, lithium-tin, lithium-aluminum-tin, lithium-gallium, or Wood's metal, or the like can be used as a negative active material. A graphite into which lithium has been inserted beforehand by electrochemical reduction can also be used as a negative active material.

The powder of the positive active material and the powder of the negative-electrode material desirably have an average particle size of 100 µm or smaller. In particular, it is desirable that the average particle size of the powder of the positive active material be 10 µm or smaller for the purpose of improving the high-output characteristics of the non-aqueous electrolyte battery. A pulverizer and a classifier are used for obtaining a powder having a given shape. For example, use is made of a mortar, ball mill, sand mill, oscillating ball mill, planetary ball mill, jet mill, counter jet mill, or cyclone type jet mill and sieves or the like. Pulverization may be conducted by wet pulverization in which water or an organic solvent, e.g., hexane, coexists. Methods of classification are not particularly limited, and sieves, an air classifier, or the like is used in each of dry and wet processes according to need.

Although the positive active material and negative-electrode material which are major components of the positive electrode and negative electrode were described above in detail, the positive electrode and negative electrode may contain a conductive material, binder, thickener, filler, and the like as other components besides the major components.

The conductive material is not limited as long as it is an electron-conductive material not adversely influencing battery performance. Usually, however, conductive materials such as natural graphite (e.g., flake graphite, flaky graphite, or soil-like graphite), artificial graphite, carbon black, acetylene black, Ketjen Black, carbon whiskers, carbon fibers, metal (e.g., copper, nickel, aluminum, silver, or gold) powders, metal fibers, and conductive ceramic materials can be incorporated alone or as a mixture thereof.

A preferred conductive material of these is acetylene black from the standpoints of electron-conductive properties and applicability. The amount of the conductive material to be added is preferably from 0.1% by weight to 50% by weight, especially preferably from 0.5% by weight to 30% by weight, based on the total weight of the positive electrode or negative electrode. It is especially desirable to use acetylene black which has been pulverized to ultrafine particles of from 0.1 to 0.5 µm, because use thereof is effective in reducing the amount of carbon required. For mixing those ingredients, physical mixing is conducted. Homogeneous mixing is ideal. For this mixing, a powder mixer such as a V-type mixer, S-type mixer, mortar mill, ball mill, or planetary mill can be used in a dry or wet mixing process.

As the binder can usually be used one of or a mixture of two or more of thermoplastic resins such as polytetrafluoroethylene (PTFE), poly(vinylidene fluoride) (PVDF), polyethylene, and polypropylene and polymers having rubber elasticity, such as ethylene/propylene/diene terpolymers (EPDM), sulfonated EPDM, styrene/butadiene rubbers (SBR), and fluororubbers. The amount of the binder to be added is preferably from 1 to 50% by weight, especially preferably from 2 to 30% by weight, based on the total weight of the positive electrode or negative electrode.

As the thickener can usually be used one of or a mixture of two or more of polysaccharides such as carboxymethyl cellulose and methyl cellulose and the like. In the case of thickeners having functional groups reactive with lithium, such as polysaccharides, it is desired to deactivate the functional groups beforehand by, e.g., methylation. The amount of the thickener to be added is preferably from 0.5 to 10% by weight, especially preferably from 1 to 2% by weight, based on the total weight of the positive electrode or negative electrode.

As the filler may be used any material which does not adversely influence battery performance. Usually, use is made of an olefin polymer such as polypropylene or polyethylene, amorphous silica, alumina, zeolite, glass, carbon, etc. The amount of the filler to be added is preferably up to 30% by weight based on the total weight of the positive electrode or negative electrode.

The positive electrode and negative electrode are produced preferably by mixing the positive active material or negative-electrode material with an organic solvent, e.g., N-methylpyrrolidone or toluene, optionally after adding a conductive material and a binder thereto, subsequently applying the resultant liquid mixture to the current collector which will be described later, and drying the coating. In the application, it is desired to apply the liquid mixture, for example, by roller coating using an applicator roll, screen coating, doctor blade coating, spin coating, or coating with a bar coater or the like in any desired thickness and any desired shape. However, methods of application should not be construed as being limited to these.

As the current collector may be used any electron conductor which does not exert an adverse influence in the battery fabricated. For example, the current collector for the positive electrode can be aluminum, titanium, stainless steel, nickel, calcined carbon, a conductive polymer, conductive glass, or the like. Besides these, use can be made, as the positive-electrode current collector, of a material obtained by treating the surface of aluminum, copper, or the like with carbon, nickel, titanium, silver, or the like for the purpose of improving adhesiveness, conductivity, and oxidation resistance. The current collector for the negative electrode can be copper, nickel, iron, stainless steel, titanium, aluminum, calcined carbon, a conductive polymer, conductive glass, Al-Cd alloy, or the like. Besides these, use can be made, as the negative-electrode current collector, of a material obtained by treating the surface of copper or the like with carbon, nickel, titanium, silver, or the like for the purpose of improving adhesiveness, conductivity, and reduction resistance. These materials can be subjected to a surface oxidation treatment.

With respect to the shape of the current collector, use is made of a foil form or a film, sheet, net, punched or expanded, lath, porous, or foamed form. A structure made up of fibers is also usable. Although the thickness thereof is not particularly limited, collectors having a thickness of from 1 to 500 µm are used. Of these current collectors, a preferred collector for the positive electrode is an aluminum foil, which has excellent oxidation resistance. Preferred current collectors for the negative electrode are a copper foil, nickel foil, and iron foil, which are excellent in reduction resistance and electron-conducting properties and are inexpensive, and an alloy foil containing part of these. Furthermore, these foils preferably are ones in which the rough-surface side has a surface roughness Ra of 0.2 µm or more. This surface roughness enables the current collector to be in highly close contact with the positive active material or negative active material. It is therefore preferred to use an electrolytic foil, which has such a rough surface. Most preferred is an electrolytic foil which has undergone a "hana" surface treatment. Furthermore, in the case where these foils are to be coated on both sides, it is desirable that the both sides have the same or almost the same surface roughness.

The separator preferably is one of or a combination of two or more of porous films, nonwoven fabrics, and the like which show excellent high-rate discharge characteristics. Examples of the material constituting the separator include polyolefin resins represented by polyethylene and polypropylene, polyester resins represented by poly(ethylene terephthalate) and poly(butylene terephthalate), poly(vinylidene fluoride), vinylidene fluoride/hexafluoropropylene copolymers, vinylidene fluoride/perfluorovinyl ether copolymers, vinylidene fluoride/tetrafluoroethylene copolymers, vinylidene fluoride/trifluoroethylene copolymers, vinylidene fluoride/fluoroethylene copolymers, vinylidene fluoride/hexafluoroacetone copolymers, vinylidene fluoride/ethylene copolymers, vinylidene fluoride/propylene copolymers, vinylidene fluoride/trifluoropropylene copolymers, vinylidene fluoride/tetrafluoroethylene/- hexafluoropropylene copolymers, and vinylidene fluoride/ethylene/tetrafluoroethylene copolymers.

The porosity of the separator is preferably 98% by volume or lower from the standpoint of strength. The porosity thereof is preferably 20% by volume or higher from the standpoint of charge/discharge characteristics.

As the separator may be used a polymer gel constituted of a polymer of, e.g., acrylonitrile, ethylene oxide, propylene oxide, methyl methacrylate, vinyl acetate, vinylpyrrolidone, poly(vinylidene fluoride), or the like and an electrolyte.

Use of a non-aqueous electrolyte in such a gel form in the invention is preferred in that it has the effect of preventing electrolyte leakage.

Furthermore, a separator which comprises a combination of a porous film, nonwoven fabric, or the like such as that described above and a polymer gel is desirable because use of this separator improves electrolyte retention. Namely, the surface of a microporous polyethylene film and the walls of the micropores are coated in a thickness of up to several micrometers with a polymer having affinity for solvents and an electrolyte is caused to held in the micropores of the coated film, whereby the polymer having affinity for solvents gels.

Examples of the polymer having affinity for solvents include poly(vinylidene fluoride) and polymers formed by the crosslinking of an acrylate monomer having an ethylene oxide group or ester group, epoxy monomer, monomer having isocyanate groups, or the like. These monomers can be crosslinked with heating or ultraviolet (UV) in the presence of a free-radical initiator or crosslinked with actinic rays, such as electron beams (EB), or the like.

For the purpose of regulating strength or properties, a property regulator can be incorporated into the polymer having affinity for solvents in such an amount as not to inhibit the formation of a crosslinked structure. Examples of the property regulator include inorganic fillers {metal oxides such as silicon oxide, titanium oxide, aluminum oxide, magnesium oxide, zirconium oxide, zinc oxide, and iron oxide and metal carbonates such as calcium carbonate and magnesium carbonate} and polymers ipoly(vinylidene fluoride), vinylidene fluoride/hexafluoropropylene copolymers, polyacrylonitrile, poly(methyl methacrylate), and the like}. The amount of the property regulator to be added is generally up to 50% by weight, preferably up to 20% by weight, based on the crosslinkable monomer.

Examples of the acrylate monomer include unsaturated monomers having a functionality of 2 or higher. Specific examples thereof include difunctional (meth)acrylates {ethylene glycol di(meth) acrylate, propylene glycol di(meth)acrylate, adipic acid dineopentyl glycol ester di(meth)acrylate, polyethylene glycol di(meth)acrylates having a degree of polymerization of 2 or higher, polypropylene glycol di(meth)acrylates having a degree of polymerization of 2 or higher, polyoxyethylene/polyoxypropylene copolymer di(meth)acrylates, butanediol di(meth)acrylate, hexamethylene glycol di(meth)acrylate, and the like}, trifunctional (meth)acrylates {trimethylolpropane tri(meth)acrylate, glycerol tri (meth) acrylate, tri(meth)acrylates of ethylene oxide adducts of glycerol, tri(meth)acrylates of propylene oxide adducts of glycerol, tri(meth)acrylates of ethylene oxide/propylene oxide adducts of glycerol, and the like}, and (meth)acrylates having a functionality of 4 or higher {pentaerythritol tetra(meth)acrylate, diglycerol hexa(meth)acrylate, and the like}. These monomers can be used alone or in combination.

A monofunctional monomer may be added to the acrylate monomer for the purpose of property regulation, etc. Examples of the monofunctional monomer include unsaturated carboxylic acids {acrylic acid, methacrylic acid, crotonic acid, cinnamic acid, vinylbenzoic acid, maleic acid, fumaric acid, itaconic acid, citraconic acid, mesaconic acid, methylmalonic acid, aconitic acid, and the like}; unsaturated sulfonic acids {styrenesulfonic acid, acrylamido-2-methylpropanesulfonic acid, and the like} or salts of these (lithium salts, sodium salts, potassium salts, ammonium salts, tetraalkylammonium salts, and the like); those unsaturated carboxylic acids partly esterified with a C₁-C₁₈ aliphatic or alicyclic alcohol, alkylene (C₂-C₄) glycol, polyalkylene (C₂-C₄) glycol, or the like (methyl maleate, monohydroxyethyl maleate, and the like) and partly amidated with ammonia or a primary or secondary amine (maleic acid monoamide, N-methylmaleic acid monoamide, N,N-diethylmaleic acid monoamide, and the like); (meth)acrylic esters [esters of (meth) acrylic acid with a C₁-C₁₈ aliphatic (e.g., methyl, ethyl, propyl, butyl, 2-ethylhexyl, or stearyl) alcohol; and esters of (meth)acrylic acid with an alkylene (C₂-C₄) glycol (ethylene glycol, propylene glycol, 1,4-butanediol, or the like) and with a polyalkylene (C₂-C₄) glycol (polyethylene glycol or polypropylene glycol)]; (meth)acrylamide or N-substituted (meth)acrylamides [(meth)acrylamide, N-methyl(meth)acrylamide, N-methylol(meth)acrylamide, and the like]; vinyl esters or allyl esters [vinyl acetate, allyl acetate, and the like]; vinyl ethers or allyl ethers [butyl vinyl ether, dodecyl allyl ether, and the like]; unsaturated nitrile compounds [(meth)acrylonitrile, crotononitrile, and the like]; unsaturated alcohols [(meth)allyl alcohol and the like]; unsaturated amines [(meth)allylamine, dimethylaminoethyl (meth)acrylate, diethylaminoethyl (meth)acrylate, and the like]; heterocycle-containing monomers [N-vinylpyrrolidone, vinylpyridine, and the like]; olefinic aliphatic hydrocarbons [ethylene, propylene, butylene, isobutylene, pentene, (C₆-C₅₀) α-olefins, and the like]; olefinic alicyclic hydrocarbons [cyclopentene, cyclohexene, cycloheptene, norbornene, and the like]; olefinic aromatic hydrocarbons [styrene, α-methylstyrene, stilbene, and the like]; unsaturated imides [maleimide and the like]; and halogen-containing monomers [vinyl chloride, vinylidene chloride, vinylidene fluoride, hexafluoropropylene, and the like].

Examples of the epoxy monomer include glycidyl ethers {bisphenol A diglycidyl ether, bisphenol F diglycidyl ether, brominated bisphenol A diglycidyl ether, phenol-novolac glycidyl ether, cresol-novolac glycidyl ether, and the like}, glycidyl esters {hexahydrophthalic acid glycidyl ester, dimer acid glycidyl esters, and the like}, glycidylamines {triglycidyl isocyanurate, tetraglycidyldiaminophenylmethane, and the like}, linear aliphatic epoxides {epoxidized polybutadiene, epoxidized soybean oil, and the like}, and alicyclic epoxides {3,4-epoxy-6-methylcyclohexylmethylcarboxylate, 3,4-epoxycyclohexylmethylcarboxylate, and the like}. These epoxy resins can be used alone or after having been cured by addition of a hardener thereto.

Examples of the hardener include aliphatic polyamines {diethylenetriamine, triethylenetetramine, 3,9-(3-aminopropyl)-2,4,8,10-tetraoxaspiro[5,5]undecane, and the like}, aromatic polyamines {m-xylenediamine, diaminophenylmethane, and the like}, polyamides {dimer acid polyamides and the like}, acid anhydrides {phthalic anhydride, tetrahydromethylphthalic anhydride, hexahydrophthalic anhydride, trimellitic anhydride, and methylnadic anhydride}, phenol compounds {phenolic novolacs and the like}, polymercaptans {polysulfides and the like}, tertiary amines {tris(dimethylaminomethyl)phenol, 2-ethyl-4-methylimidazole, and the like}, and Lewis acid complexes {boron trifluoride/ethylamine complex and the like}.

Examples of the monomer having isocyanate groups include toluene diisocyanate, diphenylmethane diisocyanate, 1,6-hexamethylene diisocyanate, 2,2,4(2,2,4)-trimethylhexamethylene diisocyanate, p-phenylene diisocyanate, 4,4'-dicyclohexylmethane diisocyanate, 3,3'-dimethyldiphenyl 4,4'-diisocyanate, dianisidine diisocyanate, m-xylene diisocyanate, trimethylxylene diisocyanate, isophorone diisocyanate, 1,5-naphthalene diisocyanate, trans-1,4 -cyclohexyl diisocyanate, and lysine diisocyanate.

In crosslinking the monomer having isocyanate groups, a compound having active hydrogen may also be used. Examples of this compound include polyols and polyamines [difunctional compounds {water, ethylene glycol, propylene glycol, diethylene glycol, dipropylene glycol, and the like}, trifunctional compounds {glycerol, trimethylolpropane, 1,2,6-hexanetriol, triethanolamine, and the like}, tetrafunctional compounds {pentaerythritol, ethylenediamine, tolylenediamine, diphenylmethanediamine, tetramethylolcyclohexane, methylglucosides, and the like}, pentafunctional compounds {2,2,6,6-tetrakis(hydroxymethyl)cyclohexanol, diethylenetriamine, and the like}, hexafunctional compounds {sorbitol, mannitol, dulcitol, and the like}, and octafunctional compounds {sucrose and the like}], polyether polyols {propylene oxide and/or ethylene oxide adducts of the polyols or polyamines mentioned above}, and polyester polyols [condensates of the aforementioned polyols with a polybasic acid {adipic acid, o-, m-, or p-phthalic acid, succinic acid, azelaic acid, sebacic acid, or ricinoleic acid}, polycaprolactone polyols {poly-ε-caprolactone and the like}, polycondensates of hydroxycarboxylic acids, and the like].

A catalyst may also be used in conducting the crosslinking reaction. Examples of the catalyst include organotin compounds, trialkylphosphines, amines [monoamines {N,N-dimethylcyclohexylamine, triethylamine, and the like}, cyclic monoamines {pyridine, N-methylmorpholine, and the like}, diamines {N,N,N',N'-tetramethylethylenediamine, N,N,N',N'-tetramethyl-1,3-butanediamine, and the like}, triamines {N,N,N',N'-pentamethyldiethylenetriamine and the like}, hexamines {N,N,N',N'-tetra(3-dimethylaminopropyl)methanediamine and the like}, cyclic polyamines {diazabicyclooctane (DABCO), N,N'-dimethylpiperazine, 1,2-dimethylimidazole, 1,8-diazabicyclo(5,4,0)undecene-7 (DBU), and the like}, and salts of these.

A non-aqueous electrolyte secondary battery according to the invention is produced preferably by a method which comprises superposing a separator, a positive electrode, and a negative electrode, infiltrating an electrolyte thereinto, for example, before or after the superposition, and finally sealing the case with a sheathing material. In the case of a non-aqueous electrolyte battery employing a wound generating element comprising a positive electrode and a negative electrode which have been stacked on each other through a separator, it is preferred that an electrolyte be infiltrated into the generating element before and after the winding. Although the infiltration may be conducted at ordinary pressure, the vacuum impregnation method or the pressure impregnation method can be used.

Examples of the material of the sheathing material in the non-aqueous electrolyte secondary battery include nickel-plated iron, stainless steel, aluminum, and metal/resin composite films. For example, a metal/resin composite film having a constitution comprising resin films and a metal foil sandwiched therebetween is preferred. Examples of the metal foil are not particularly limited as long as they are foils of aluminum, iron, nickel, copper, stainless steel, titanium, gold, silver, or the like which are free from pinholes. However, aluminum foils are preferred because they are lightweight and inexpensive. Preferred for use as the resin film to be disposed on the outer side in the battery is a resin film having excellent piercing strength, such as a poly (ethylene terephthalate) film or nylon film. Preferred as the resin film to be disposed on the inner side in the battery is a film which is fusion-bondable and has solvent resistance, such as a polyethylene film or nylon film.

The constitution of the non-aqueous electrolyte secondary battery is not particularly limited. Examples thereof include a coin battery and button battery which each have a positive electrode, negative electrode, and separator of a single-layer or multilayer structure, and further include a cylindrical battery, prismatic battery, and flat type battery which each have a positive electrode, negative electrode, and roll-form separator.

### <Examples>

The invention will be explained below in more detail by reference to Examples of each of the embodiments given above and Comparative Examples, but the invention should not be construed as being limited by the following Examples.

Only Examples 2-1 to 2-10, 3-1 to 3-10, 4-1 to 4-4 and 4-5 to 4-13 form part of the claimed invention. Examples 1-1 to 1-11 and the Comparative Examples are provided as background art only.

### [First Embodiment]

### (EXAMPLE 1-1)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

Analysis of the powder by X-ray diffractometry with CuK_{α} ray revealed that the powder showed diffraction peaks respectively at around 2θ's of 18.58°, 36.38°, 37.68°, 38.02°, 44.10°, 48.24°, 58.22°, 63.92°, 64.10°, 64.4°, and 67.68°. It was thus found that a highly crystalline single-phase structure had been synthesized which was considered to be a layer structure belonging to the space group R3/m although not completely coincident therewith. The X-ray diffraction pattern for the powder is shown in Fig. 3. Elemental analysis revealed that the composition of this powder was LiMn_{0.5}Ni_{0.5}O₂. This powder is referred to as powder A.

This powder A was used as a positive active material to fabricate a prismatic non-aqueous electrolyte battery of the constitution shown in Fig. 2 having a capacity of about 15 Ah in the following manner.

Powder A as a positive active material, acetylene black as a conductive material, and poly(vinylidene fluoride) (PVDF) as a binder were mixed together in a weight ratio of 85:10:5. Thereto was added N-methylpyrrolidone as a solvent. The resultant mixture was kneaded for dispersion to prepare a coating fluid for positive electrode formation. The poly(vinylidene fluoride) was used in the form of a solution containing the solid dissolved or dispersed therein; the amount thereof was shown in terms of solid amount. The coating fluid for positive electrode formation was applied to each side of an aluminum foil current collector having a thickness of 20 µm so that the coated foil as a whole came to have a thickness of 230 µm. Thus, a positive-electrode sheet having a capacity of 6.3 mAh/cm² was produced. This positive-electrode sheet was cut into a size having a width of 61 mm and a height of 107 mm. An aluminum lead having a thickness of 20 µm and a width of 10 mm was attached to an end of the cut sheet to obtain a positive electrode plate 7.

Artificial graphite (particle diameter, 6 µm) was used as a negative-electrode material. Poly(vinylidene fluoride) (PVDF) as a binder was added thereto in an amount of 10% by weight based on the negative-electrode material. Thereto was added N-methylpyrrolidone as a solvent. The resultant mixture was kneaded for dispersion to prepare a coating fluid for negative electrode formation. The poly(vinylidene fluoride) was used in the form of a solution containing the solid dissolved or dispersed therein; the amount thereof was shown in terms of solid amount. The coating fluid for negative electrode formation was applied to each side of a copper foil current collector having a thickness of 10 µm so that the coated foil as a whole came to have a thickness of 180 µm. Thus, a negative-electrode sheet having a capacity of 7 mAh/cm² was produced. This negative-electrode sheet was cut into a size having a width of 65 mm and a height of 111 mm. A copper lead having a thickness of 10 µm and a width of 10 mm was attached to an end of the cut sheet to obtain a negative electrode plate 9.

The positive electrode plate 7 and negative electrode plate 9 were dried under reduced pressure at 150°C for 12 hours. Subsequently, the positive electrode plate was inserted into a bag, as a separator 8, obtained by cutting a microporous polyethylene film into a bag shape with a width of 65 mm and a height of 111 mm. The positive electrode plate 7 with the separator 8 and the negative electrode plate 9 were alternately stacked in this order to obtain an electrode group composed of forty sheets of the positive electrode plate 7 with the separator 8 and forty-one sheets of the negative electrode plate 9.

The electrode group was wrapped in an insulating film made of a polyethylene resin, and housed in a prismatic battery case 10 made of aluminum. The leads of each positive electrode plate 7 and of each negative electrode plate 9 were connected by a bolt respectively to a positive terminal 5 and a negative terminal 4 attached to a cap 2 made of aluminum and having a safety vent 1. The terminals 5 and 4 had been insulated from the cap 2 with a gasket 6 made of a polypropylene resin.

The cap 2 and the battery case 10 were laser-welded together at a laser-welded part 3. An electrolytic solution prepared by dissolving 1 mol/l LiPF₆ in a mixed solvent composed of ethylene carbonate and diethyl carbonate in a volume ratio of 1:1 was charged into the battery case 10 in an amount of 65 g. This battery case was sealed. Thereafter, constant-current constant-voltage charge at 1.5 A and 4.2 V was conducted at 25°C for 15 hours and constant-current discharge at 1.5 A was conducted at 25°C to a final voltage of 3 V. Thus, a prismatic lithium battery was obtained which had a length of 70 mm, height of 130 mm (height including terminal height: 136 mm), and width of 22 mm. This battery is referred to as battery of Example 1-1.

### (EXAMPLE 1-2)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 20 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-2.

### (EXAMPLE 1-3)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,030°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-3.

### (EXAMPLE 1-4)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,060°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-4.

### (EXAMPLE 1-5)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-5.

### (EXAMPLE 1-6)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 950°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-6.

### (EXAMPLE 1-7)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 960°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-7.

### (EXAMPLE 1-8)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 980°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-8.

### (EXAMPLE 1-9)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 5 hours in an oxygen atmosphere. The resultant particles were classified to obtain a powder having a D₅₀ of 20 µm. The specific surface area thereof as measured by the BET method was 0.3 m²/g.

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 1-9.

### (EXAMPLE 1-10)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 5 hours in an oxygen atmosphere. The resultant particles were classified to obtain a powder having a D₅₀ of 9 µm. The specific surface area thereof as measured by the BET method was 0.3 m²/g.

This powder was analyzed by X-ray diffractometry with CuK_{α} ray. As a result, it was found that a highly crystalline single-phase structure considered to be the same layer structure as in powder A had been synthesized. The X-ray diffraction pattern for the powder is shown in Fig. 4. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-10.

### (EXAMPLE 1-11)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 20 hours in an oxygen atmosphere. The resultant particles were classified to obtain a powder having a D₅₀ of 5 µm. The specific surface area thereof as measured by the BET method was 1.5 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 1-11.

### (COMPARATIVE EXAMPLE 1-1)

An aqueous sodium hydroxide solution was added to an aqueous solution containing manganese nitrate and nickel nitrate in an Mn:Ni atomic ratio of 1.9:0.1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 950°C for 3 hours in an oxygen atmosphere. The resultant particles were classified to obtain a powder having a D₅₀ of 20 µm. The specific surface area thereof as measured by the BET method was 0.6 m²/g.

This powder was analyzed by X-ray diffractometry with CuK_{α} ray. As a result, diffraction peaks were observed at 2θ's of 18°, 37°, 39°, 45°, 61°, 65°, and 67°. It was thus found that crystals in a layer rock salt form belonging to the space group C2/m had been synthesized. Elemental analysis revealed that the composition of this powder was LiMn_{0.95}Ni_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 1-1.

### (COMPARATIVE EXAMPLE 1-2)

An aqueous sodium hydroxide solution was added to an aqueous solution containing manganese nitrate to cause precipitation. The precipitate was dried with heating at 150°C to obtain a manganese compound. This manganese compound was added to an aqueous lithium hydroxide solution and this mixture was stirred. Thereafter, the solvent was vaporized, and the residue was dried and then calcined at 850°C for 3 hours in an oxygen atmosphere. The resultant particles were classified to obtain a powder having a D₅₀ of 10 µm. The specific surface area thereof as measured by the BET method was 0.4 m²/g. This powder was analyzed by X-ray diffractometry with CuK_{α} ray. As a result, it was found that crystals having a spinel structure had been synthesized. Elemental analysis revealed that the composition of this powder was Li_{1.05}Mn_{1.95}O₄. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 1-2.

### (COMPARATIVE EXAMPLE 1-3)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 3 hours in an oxygen atmosphere. The resultant particles were classified to obtain a powder having a D₅₀ of 3 µm. The specific surface area thereof as measured by the BET method was 2 . 0 m²/g .

This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 1-3.

### (COMPARATIVE EXAMPLE 1-4)

An aqueous sodium hydroxide solution was added to an aqueous solution containing manganese nitrate and nickel nitrate in an Mn:Ni atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 800°C for 15 hours in an oxygen atmosphere. The resultant particles were classified to obtain a powder having a D₅₀ of 5 µm. The specific surface area thereof as measured by the BET method was 2.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 1-4.

### (COMPARATIVE EXAMPLE 1-5)

An aqueous sodium hydroxide solution was added to an aqueous solution containing manganese nitrate and nickel nitrate in an Mn:Ni - atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,000°C for 24 hours in an oxygen atmosphere. The resultant particles were classified to obtain a powder having a D₅₀ of 5 µm. The specific surface area thereof as measured by the BET method was 0.2 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂.

A prismatic lithium battery of the constitution shown in Fig. 2 having a design capacity of 15 Ah was fabricated in the same manner as in (Example 1-1), except that this powder was used as a positive active material. This battery is referred to as battery of Comparative Example 1-5.

### (COMPARATIVE EXAMPLE 1-6)

An aqueous sodium hydroxide solution was added to an aqueous solution containing manganese nitrate and nickel nitrate in an Mn:Ni - atomic ratio of 1:1 to cause coprecipitation. The precipitate was dried with heating at 150°C to obtain a coprecipitated manganese-nickel compound. This coprecipitated manganese-nickel compound was added to an aqueous lithium hydroxide solution and this mixture was stirred. Thereafter, the solvent was vaporized, and the residue was dried and then calcined at 1,100°C for 24 hours in an oxygen atmosphere. The resultant particles were classified to obtain a powder having a D₅₀ of 30 µm. The specific surface area thereof as measured by the BET method was 0.2 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.5}Ni_{0.5}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 1-6.

### [Second Embodiment]

### (EXAMPLE 2-1)

An aqueous sodium hydroxide solution was added to an aqueous solution containing manganese nitrate and nickel nitrate in an Mn:Ni atomic ratio of 0.95:0.95 to cause coprecipitation. The precipitate was dried with heating at 150°C to obtain a coprecipitated manganese-nickel compound. This coprecipitated manganese-nickel compound and boric acid were added to lithium hydroxide in such proportions as to result in an Li:Mn:Ni:B elemental ratio of 2:0.95:0.95:0.10. This mixture was calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}B_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-1.

### (EXAMPLE 2-2)

An aqueous sodium hydroxide solution was added to an aqueous solution containing manganese nitrate, nickel nitrate, and vanadium oxide in an Mn:Ni:V atomic ratio of 0.95:0.95:0.1 to cause coprecipitation. The precipitate was dried with heating at 150°C to obtain a coprecipitated manganese-nickel-vanadium compound. This coprecipitated manganese-nickel-vanadium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}V_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-2.

### (EXAMPLE 2-3)

An aqueous sodium hydroxide solution was added to an aqueous solution containing manganese nitrate, nickel nitrate, and aluminum nitrate in an Mn:Ni:Al atomic ratio of 0.95:0.95:0.1 to cause coprecipitation. The precipitate was dried with heating at 150°C to obtain a coprecipitated manganese-nickel-aluminum compound. This coprecipitated manganese-nickel-aluminum compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Al_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-3.

### (EXAMPLE 2-4)

An aqueous sodium hydroxide solution was added to an aqueous solution containing manganese nitrate, nickel nitrate, and magnesium nitrate in an Mn:Ni:Mg atomic ratio of 0.95:0.95:0.1 to cause coprecipitation. The precipitate was dried with heating at 150°C to obtain a coprecipitated manganese-nickel-magnesium compound. This coprecipitated manganese-nickel-magnesium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Mg_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-4.

### (EXAMPLE 2-5)

An aqueous sodium hydroxide solution was added to an aqueous solution containing manganese nitrate, nickel nitrate, and cobalt nitrate in an Mn:Ni:Co atomic ratio of 0.95:0.95:0.1 to cause coprecipitation. The precipitate was dried with heating at 150°C to obtain a coprecipitated manganese-nickel-cobalt compound. This coprecipitated manganese-nickel-cobalt compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Co_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-5.

### (EXAMPLE 2-6)

An aqueous sodium hydroxide solution was added to an aqueous solution containing manganese nitrate, nickel nitrate, and chromium nitrate in an Mn:Ni:Cr atomic ratio of 0.95:0.95:0.1 to cause coprecipitation. The precipitate was dried with heating at 150°C to obtain a coprecipitated manganese-nickel-chromium compound. This coprecipitated manganese-nickel-magnesium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Cr_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-6.

### (EXAMPLE 2-7)

An aqueous sodium hydroxide solution was added to an aqueous solution containing manganese nitrate, nickel nitrate, and titanium oxide in an Mn:Ni:Ti atomic ratio of 0.95:0.95:0.1 to cause coprecipitation. The precipitate was dried with heating at 150°C to obtain a coprecipitated manganese-nickel-titanium compound. This coprecipitated manganese-nickel-titanium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Ti_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-7.

### (EXAMPLE 2-8)

An aqueous sodium hydroxide solution was added to an aqueous solution containing manganese nitrate, nickel nitrate, and iron sulfate in an Mn:Ni:Fe atomic ratio of 0.95:0.95:0.1 to cause coprecipitation. The precipitate was dried with heating at 150°C to obtain a coprecipitated manganese-nickel-iron compound. This coprecipitated manganese-nickel-iron compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Fe_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-8.

### (EXAMPLE 2-9)

An aqueous sodium hydroxide solution was added to an aqueous solution containing manganese nitrate, nickel nitrate, and copper sulfate in an Mn:Ni:Cu atomic ratio of 0.95:0.95:0.1 to cause coprecipitation. The precipitate was dried with heating at 150°C to obtain a coprecipitated manganese-nickel-copper compound. This coprecipitated manganese-nickel-copper compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Cu_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-9.

### (EXAMPLE 2-10)

An aqueous sodium hydroxide solution was added to an aqueous solution containing manganese nitrate, nickel nitrate, and zinc sulfate in an Mn:Ni:Zn atomic ratio of 0.95:0.95:0.1 to cause coprecipitation. The precipitate was dried with heating at 150°C to obtain a coprecipitated manganese-nickel-zinc compound. This coprecipitated manganese-nickel-zinc compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Zn_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 2-10.

### (COMPARATIVE EXAMPLE 2-1)

An aqueous sodium hydroxide solution was added to an aqueous solution containing manganese nitrate, nickel nitrate, and magnesium nitrate in an Mn:Ni:Mg atomic ratio of 0.95:0.95:0.1 to cause coprecipitation. The precipitate was dried with heating at 150°C to obtain a coprecipitated manganese-nickel-magnesium compound. This coprecipitated manganese-nickel-magnesium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 15 µm. The specific surface area thereof as measured by the BET method was 0.2 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Mg_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 2-1.

### (COMPARATIVE EXAMPLE 2-2)

An aqueous sodium hydroxide solution was added to an aqueous solution containing manganese nitrate, nickel nitrate, and magnesium nitrate in an Mn:Ni:Mg atomic ratio of 0.95:0.95:0.1 to cause coprecipitation. The precipitate was dried with heating at 150°C to obtain a coprecipitated manganese-nickel-magnesium compound. This coprecipitated manganese-nickel-magnesium compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 6 µm. The specific surface area thereof as measured by the BET method was 1.9 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of this powder was LiMn_{0.475}Ni_{0.475}Mg_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 2-2.

### [Third Embodiment]

### (EXAMPLE 3-1)

An aqueous sodium hydroxide solution was added to an aqueous solution containing manganese nitrate and nickel nitrate in an Mn:Ni atomic ratio of 0.95:0.95 to cause coprecipitation. The precipitate was dried with heating at 150°C to obtain a coprecipitated manganese-nickel compound. This coprecipitated manganese-nickel compound and boric acid were added to lithium hydroxide in such proportions as to result in an Li:Mn:Ni:B elemental ratio of 2.00:0.95:0.95:0.1. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. This powder is referred to as powder B. Elemental analysis revealed that the composition of this powder B was LiMn_{0.475}Ni_{0.475}B_{0.05}O₂.

In analysis in the depth direction, it was observed that B (boron) localized in the surface (see Fig. 1). A prismatic lithium battery of the constitution shown in Fig. 2 having a capacity of about 15 Ah was fabricated in the same manner as in (Example 1-1), except that this powder B was used as a positive active material. This battery is referred to as battery of Example 3-1.

### (EXAMPLE 3-2)

An aqueous sodium hydroxide solution was added to an aqueous solution containing manganese nitrate, nickel nitrate, and vanadium oxide in an Mn:Ni:V atomic ratio of 0.95:0.948:0.1 to cause coprecipitation. The precipitate was dried with heating at 150°C to obtain a coprecipitated manganese-nickel-vanadium compound. This coprecipitated manganese-nickel-vanadium compound and boric acid were added to lithium hydroxide in such proportions as to result in an Li:Mn:Ni:V:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}V_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-2.

### (EXAMPLE 3-3)

An aqueous sodium hydroxide solution was added to an aqueous solution containing manganese nitrate, nickel nitrate, and aluminum nitrate in an Mn:Ni:Al atomic ratio of 0.95:0.948:0.1 to cause coprecipitation. The precipitate was dried with heating at 150°C to obtain a coprecipitated manganese-nickel-aluminum compound. This coprecipitated manganese-nickel-aluminum compound and boric acid were added to lithium hydroxide in such proportions as to result in an Li:Mn:Ni:Al:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Al_{0.05}B_{0.001}O₂. This powder is referred to as powder.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-3.

### (EXAMPLE 3-4)

An aqueous sodium hydroxide solution was added to an aqueous solution containing manganese nitrate, nickel nitrate, and manganese nitrate in an Mn:Ni:Mg atomic ratio of 0.95:0.948:0.1 to cause coprecipitation. The precipitate was dried with heating at 150°C to obtain a coprecipitated manganese-nickel-magnesium compound. This coprecipitated manganese-nickel-magnesium compound and boric acid were added to an aqueous lithium hydroxide solution in such proportions as to result in an Li:Mn:Ni:Mg:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Mg_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-4

### (EXAMPLE 3-5)

An aqueous sodium hydroxide solution was added to an aqueous solution containing manganese nitrate, nickel nitrate, and cobalt nitrate in an Mn:Ni:Co atomic ratio of 0.95:0.948:0.1 to cause coprecipitation. The precipitate was dried with heating at 150°C to obtain a coprecipitated manganese-nickel-cobalt compound. This coprecipitated manganese-nickel-cobalt compound and boric acid were added to an aqueous lithium hydroxide solution in such proportions as to result in an Li:Mn:Ni:Co:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Co_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-5.

### (EXAMPLE 3-6)

An aqueous sodium hydroxide solution was added to an aqueous solution containing manganese nitrate, nickel nitrate, and chromium nitrate in an Mn:Ni:Cr atomic ratio of 0.95:0.948:0.1 to cause coprecipitation. The precipitate was dried with heating at 150°C to obtain a coprecipitated manganese-nickel-chromium compound. This coprecipitated manganese-nickel-chromium compound and boric acid were added to an aqueous lithium hydroxide solution in such proportions as to result in an Li:Mn:Ni:Cr:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1. 0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Cr_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-6.

### (EXAMPLE 3-7)

An aqueous sodium hydroxide solution was added to an aqueous solution containing manganese nitrate, nickel nitrate, and titanium oxide in an Mn:Ni:Ti atomic ratio of 0.95:0.948:0.1 to cause coprecipitation. The precipitate was dried with heating at 150°C to obtain a coprecipitated manganese-nickel-titanium compound. This coprecipitated manganese-nickel-titanium compound and boric acid were added to an aqueous lithium hydroxide solution in such proportions as to result in an Li:Mn:Ni:Ti:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Ti_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-7.

### (EXAMPLE 3-8)

An aqueous sodium hydroxide solution was added to an aqueous solution containing manganese nitrate, nickel nitrate, and iron sulfate in an Mn:Ni:Fe atomic ratio of 0.95:0.948:0.1 to cause coprecipitation. The precipitate was dried with heating at 150°C to obtain a coprecipitated manganese-nickel-iron compound. This coprecipitated manganese-nickel-iron compound and boric acid were added to an aqueous lithium hydroxide solution in such proportions as to result in an Li:Mn:Ni:Fe:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Fe_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-8.

### (EXAMPLE 3-9)

An aqueous sodium hydroxide solution was added to an aqueous solution containing manganese nitrate, nickel nitrate, and copper sulfate in an Mn:Ni:Cu atomic ratio of 0.95:0.948:0.1 to cause coprecipitation. The precipitate was dried with heating at 150°C to obtain a coprecipitated manganese-nickel-copper compound. This coprecipitated manganese-nickel-copper compound and boric acid were added to an aqueous lithium hydroxide solution in such proportions as to result in an Li:Mn:Ni:Cu:B elemental ratio of 2:0.95:0.948:0.1:0.002. This mixture was calcined at 1,000°C for 12 hours in an oxygen atmosphere. The resultant particles were classified to obtain a powder having a D₅₀ of 9 µm. The specific surface area thereof as measured by the BET method was 1. 0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Cu_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-9.

### (EXAMPLE 3-10)

An aqueous sodium hydroxide solution was added to an aqueous solution containing manganese nitrate, nickel nitrate, and zinc sulfate in an Mn:Ni:Zn atomic ratio of 0.95:0.948:0.1 to cause coprecipitation. The precipitate was dried with heating at 150°C to obtain a coprecipitated manganese-nickel-zinc compound. This coprecipitated manganese-nickel-zinc compound and boric acid were added to an aqueous lithium hydroxide solution in such proportions as to result in an Li:Mn:Ni:Zn:B elemental ratio of 2:0.95:0.948:0.1:0.002. This mixture was calcined at 1,000°C for 12 hours in an oxygen atmosphere. The resultant particles were classified to obtain a powder having a D₅₀ of 10 µm. The specific surface area thereof as measured by the BET method was 1.0 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.474}Zn_{0.05}B_{0.001}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Example 3-10.

### (COMPARATIVE EXAMPLE 3-1)

An aqueous sodium hydroxide solution was added to an aqueous solution containing manganese nitrate and nickel nitrate in an Mn:Ni atomic ratio of 0.95:0.95 to cause coprecipitation. The precipitate was dried with heating at 150°C to obtain a coprecipitated manganese-nickel compound. This coprecipitated manganese-nickel compound and boric acid were added to lithium hydroxide in such proportions as to result in an Li:Mn:Ni:B elemental ratio of 2.00:0.95:0.95:0.1. This mixture was calcined at 1,000°C for 12 hours in an oxygen atmosphere. The resultant particles were classified to obtain a powder having a D₅₀ of 9 µm. The specific surface area thereof as measured by the BET method was 0.2 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.475}B_{0.05}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 3-1.

### (COMPARATIVE EXAMPLE 3-2)

An aqueous sodium hydroxide solution was added to an aqueous solution containing manganese nitrate and nickel nitrate in an Mn:Ni atomic ratio of 0.95:0.95 to cause coprecipitation. The precipitate was dried with heating at 150°C to obtain a coprecipitated manganese-nickel compound. This coprecipitated manganese-nickel compound and boric acid were added to lithium hydroxide in such proportions as to result in an Li:Mn:Ni:B elemental ratio of 2.00:0.95:0.95:0.1. This mixture was calcined at 1,000°C for 12 hours in an oxygen atmosphere. The resultant particles were classified to obtain a powder having a D₅₀ of 4 µm. The specific surface area thereof as measured by the BET method was 2.4 m²/g. This powder was analyzed by X-ray diffractometry with CuK_{α} ray. As a result, it was found that a highly crystalline single-phase structure considered to be the same layer structure as in powder A had been synthesized. Elemental analysis revealed that the composition of the powder was LiMn_{0.475}Ni_{0.475}B_{0.05}O₂.

A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 3-2.

### [Fourth Embodiment]

### (EXAMPLE 4-1)

An aqueous sodium hydroxide solution was added to an aqueous solution containing manganese nitrate, nickel nitrate, and cobalt nitrate in an Mn:Ni:Co atomic ratio of 9:9:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 20 µm. The specific surface area thereof as measured by the BET method was 0.9 m²/g.

Analysis of the powder by X-ray diffractometry with CuK_{α} ray revealed that the powder showed diffraction peaks at 2θ's of 18.56°, 36.56°, 37.76°, 38.24°, 44.32°, 48.4°, 58.4°, 64.16°, 64.8°, and 68.8°. It was thus found that a highly crystalline single-phase structure had been synthesized which was considered to be a layer structure belonging to the space group R3m. The X-ray diffraction pattern for the powder is shown in Fig. 5. Elemental analysis revealed that the composition of this powder was LiMn_{0.45}Ni_{0.45}Co_{0.1}O₂. This powder is referred to as powder D.

A prismatic lithium battery of the constitution shown in Fig. 2 having a capacity of about 15 Ah was fabricated in the same manner as in (Example 1-1), except that the powder D was used as a positive active material. This battery is referred to as battery of Example 4-1.

### (EXAMPLE 4-2)

An aqueous sodium hydroxide solution was added to an aqueous solution containing manganese nitrate, nickel nitrate, and cobalt nitrate in an Mn:Ni:Co atomic ratio of 2:2:1 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 20 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.4}Ni_{0.4}Co_{0.2}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-2.

### (EXAMPLE 4-3)

An aqueous sodium hydroxide solution was added to an aqueous solution containing manganese nitrate, nickel nitrate, and cobalt nitrate in an Mn:Ni:Co atomic ratio of 9:9:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 5 hours in an oxygen atmosphere. The resultant particles were classified to obtain a powder having a D₅₀ of 20 µm. The specific surface area thereof as measured by the BET method was 0.3 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.45}Ni_{0.45}Co_{0.1}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-3.

### (EXAMPLE 4-4)

An aqueous sodium hydroxide solution was added to an aqueous solution containing manganese nitrate, nickel nitrate, and cobalt nitrate in an Mn:Ni:Co atomic ratio of 9:9:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 20 hours in an oxygen atmosphere. The resultant particles were classified to obtain a powder having a D₅₀ of 5 µm. The specific surface area thereof as measured by the BET method was 1.5 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.45}Ni_{0.45}Co_{0.1}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-4.

### (EXAMPLE 4-5)

An aqueous sodium hydroxide solution was added to an aqueous solution containing manganese nitrate, nickel nitrate, and cobalt nitrate in an Mn:Ni:Co atomic ratio of 17:17:4 to cause coprecipitation. The precipitate was dried with heating at 150°C to obtain a coprecipitated manganese-nickel-cobalt compound. This coprecipitated compound and boric acid were added to lithium hydroxide in such proportions as to result in an Li:Mn:Ni:Co:B elemental ratio of 2:0.85:0.85:0.2:0.1. This mixture was calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}B_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-5.

### (EXAMPLE 4-6)

An aqueous sodium hydroxide solution was added to an aqueous solution containing manganese nitrate, nickel nitrate, cobalt nitrate, and vanadium oxide in an Mn:Ni:Co:V atomic ratio of 17:17:4:2 to cause coprecipitation. The precipitate was dried with heating at 150°C to obtain a coprecipitated manganese-nickel-cobalt-vanadium compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}V_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-6.

### (EXAMPLE 4-7)

An aqueous sodium hydroxide solution was added to an aqueous solution containing manganese nitrate, nickel nitrate, cobalt nitrate, and aluminum nitrate in an Mn:Ni:Co:Al atomic ratio of 17:17:4:2 to cause coprecipitation. The precipitate was dried with heating at 150°C to obtain a coprecipitated manganese-nickel-cobalt-aluminum compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Al_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-7.

### (EXAMPLE 4-8)

An aqueous sodium hydroxide solution was added to an aqueous solution containing manganese nitrate, nickel nitrate, cobalt nitrate, and magnesium nitrate in an Mn:Ni:Co:Mg atomic ratio of 17:17:4:2 to cause coprecipitation. The precipitate was dried with heating at 150°C to obtain a coprecipitated manganese-nickel-cobalt-magnesium compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Mg_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-8.

### (EXAMPLE 4-9)

An aqueous sodium hydroxide solution was added to an aqueous solution containing manganese nitrate, nickel nitrate, cobalt nitrate, and chromium nitrate in an Mn:Ni:Co:Cr atomic ratio of 17:17:4:2 to cause coprecipitation. The precipitate was dried with heating at 150°C to obtain a coprecipitated manganese-nickel-cobalt-chromium compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Cr_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-9.

### (EXAMPLE 4-10)

An aqueous sodium hydroxide solution was added to an aqueous solution containing manganese nitrate, nickel nitrate, cobalt nitrate, and titanium oxide in an Mn:Ni:Co:Ti atomic ratio of 17:17:4:2 to cause coprecipitation. The precipitate was dried with heating at 150°C to obtain a coprecipitated manganese-nickel-cobalt-titanium compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Ti_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-10.

### (EXAMPLE 4-11)

An aqueous sodium hydroxide solution was added to an aqueous solution containing manganese nitrate, nickel nitrate, cobalt nitrate, and iron sulfate in an Mn:Ni:Co:Fe atomic ratio of 17:17:4:2 to cause coprecipitation. The precipitate was dried with heating at 150°C to obtain a coprecipitated manganese-nickel-cobalt-iron compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.42.5}Ni_{0.425}Co_{0.1}Fe_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-11.

### (EXAMPLE 4-12)

An aqueous sodium hydroxide solution was added to an aqueous solution containing manganese nitrate, nickel nitrate, cobalt nitrate, and copper sulfate in an Mn:Ni:Co:Cu atomic ratio of 17:17:4:2 to cause coprecipitation. The precipitate was dried with heating at 150°C to obtain a coprecipitated manganese-nickel-cobalt-copper compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Cu_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-12.

### (EXAMPLE 4-13)

An aqueous sodium hydroxide solution was added to an aqueous solution containing manganese nitrate, nickel nitrate, cobalt nitrate, and zinc sulfate in an Mn:Ni:Co:Zn atomic ratio of 17:17:4:2 to cause coprecipitation. The precipitate was dried with heating at 150°C to obtain a coprecipitated manganese-nickel-cobalt-zinc compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 9 µm. The specific surface area thereof as measured by the BET method was 0.9 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.425}Ni_{0.425}Co_{0.1}Zn_{0.05}O₂. A prismatic lithium battery of the constitution shown in Fig. 2 having a capacity of about 15 Ah was fabricated in the same manner as in (Example 1-1), except that this powder was used as a positive active material. This battery is referred to as battery of Example 4-13.

### (COMPARATIVE EXAMPLE 4-1)

An aqueous sodium hydroxide solution was added to an aqueous solution containing manganese nitrate, nickel nitrate, and cobalt nitrate in an Mn:Ni:Co atomic ratio of 7:11:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 12 hours in an oxygen atmosphere. The resultant particles were classified to obtain a powder having a D₅₀ of 20 µm. The specific surface area thereof as measured by the BET method was 1.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.35}Ni_{0.55}Co_{0.1}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 4-1.

### (COMPARATIVE EXAMPLE 4-2)

An aqueous sodium hydroxide solution was added to an aqueous solution containing manganese nitrate, nickel nitrate, and cobalt nitrate in an Mn:Ni:Co atomic ratio of 9:9:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 24 hours in an oxygen atmosphere. The resultant particles were classified to obtain a powder having a D₅₀ of 5 µm. The specific surface area thereof as measured by the BET method was 0.3 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.45}Ni_{0.45}Co_{0.1}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 4-2.

### (COMPARATIVE EXAMPLE 4-3)

An aqueous sodium hydroxide solution was added to an aqueous solution containing manganese nitrate, nickel nitrate, and cobalt nitrate in an Mn:Ni:Co atomic ratio of 9:9:2 to cause coprecipitation. The precipitate was dried with heating at 150°C to obtain a coprecipitated manganese-nickel-cobalt compound. This coprecipitated compound was added to an aqueous lithium hydroxide solution and this mixture was stirred. Thereafter, the solvent was vaporized, and the residue was dried and then calcined at 1,000°C for 3 hours in an oxygen atmosphere. The resultant particles were classified to obtain a powder having a D₅₀ of 5 µm. The specific surface area thereof as measured by the BET method was 2.0 m²/g.

This powder was analyzed by X-ray diffractometry with CuK_{α} ray. As a result, it was found that a highly crystalline single-phase structure considered to be the same layer structure as in powder D had been synthesized. Elemental analysis revealed that the composition of the powder was LiMn_{0.45}Ni_{0.45}Co_{0.1}O₂. A prismatic lithium battery of the constitution shown in Fig. 2 having a capacity of about 15 Ah was fabricated in the same manner as in (Example 1-1), except that this powder was used as a positive active material. This battery is referred to as battery of Comparative Example 4-3.

### (Battery Performance Tests)

The inventive batteries and comparative batteries described above were subjected at a temperature of 25°C to a high-rate discharge performance test and subsequently to a charge/discharge cycle performance test.

Conditions for the high-rate discharge performance test are as follows. Charge was conducted at a constant current of 7.5 A (0.5 It) and a constant voltage of 4.3 V for 3 hours, and discharge was conducted at a constant current of 1.5 A (0.1 It) or 30 A (2 It) to a final voltage of 3.0 V.

Conditions for the charge/discharge cycle performance test are as follows. Charge was conducted at a constant current of 7.5 A (0.5 It) and a constant voltage of 4.3 V for 3 hours, and discharge was conducted at a constant current of 7.5 A (0.5 It) to a final voltage of 3.0 V. A 10-minute rest mode was inserted after each charge and after each discharge.

In the high-rate discharge test, the ratio of the discharge capacity in discharge at a current of 30 A to the discharge capacity in discharge at a current of 1.5 A was taken as high-rate discharge performance value (%). In the charge/discharge cycle performance test, the number of cycles required for the discharge capacity to decrease to 80% of the initial discharge capacity as measured at the initiation of the charge/discharge cycle performance test was taken as cycle life. The results of these performance tests are shown in Tables 1 to 4. In the tables, "Half width 18.6°" means the half width of the diffraction peak appearing at 2θ=18.6±1°, while "Half width 44.1°" means the half width of the diffraction peak appearing at 2θ=44.1±1°. Furthermore, "Peak intensity ratio" means the ratio of the relative intensity of the diffraction peak appearing at 2θ=44.1±1° to that of the diffraction peak appearing at 2θ=18.6±1°.

**Table 1**

| | Positive active material | | | | | | Battery performance | | | |
|---|---|---|---|---|---|---|---|---|---|---|
| Battery | Composition | Specific surface area (g/m²) | Average particle diameter (µm) | Peak intensity ratio | Half width 18.6° | Half width 44.1° | 1.5 A discharge capacity (mAh/g) | 30 A discharge capacity (mAh/g) | High-rate discharge performance value (%) | Cycle life |
| Ex. 1-1 | LiMn_{0.5}Ni_{0.5}O₂ | 1.0 | 9 | 1.0 | 0.17 | 0.15 | 140 | 85 | 60.7 | 500 |
| Ex. 1-2 | LiMn_{0.5}Ni_{0.5}O₂ | 1.0 | 20 | 0.9 | 0.17 | 0.14 | 140 | 85 | 60.7 | 500 |
| Ex. 1-3 | LiMn_{0.5}Ni_{0.5}O₂ | 0.9 | 20 | 0.6 | 0.20 | 0.17 | 150 | 92 | 61.3 | 350 |
| Ex. 1-4 | LiMn_{0.5}Ni_{0.5}O₂ | 0.9 | 20 | 0.6 | 0.17 | 0.15 | 150 | 93 | 62.0 | 450 |
| Ex. 1-5 | LiMn_{0.5}Ni_{0.5}O₂ | 0.9 | 20 | 1.1 | 0.17 | 0.12 | 135 | 81 | 60.0 | 480 |
| Ex. 1-6 | LiMn_{0.5}Ni_{0.5}O₂ | 0.9 | 20 | 1.1 | 0.13 | 0.10 | 135 | 78 | 57.8 | 520 |
| Ex. 1-7 | LiMn_{0.5}Ni_{0.5}O₂ | 0.9 | 20 | 1.2 | 0.17 | 0.12 | 130 | 65 | 50.0 | 550 |
| Ex. 1-8 | LiMn_{0.5}Ni_{0.5}O₂ | 0.9 | 20 | 1.0 | 0.12 | 0.10 | 137 | 62 | 45.3 | 500 |
| Ex. 1-9 | LiMn_{0.5}Ni_{0.5}O₂ | 0.3 | 20 | 0.9 | 0.18 | 0.15 | 140 | 84 | 60.0 | 510 |
| Ex. 1-10 | LiMn_{0.5}Ni_{0.5}O₂ | 0.3 | 9 | 0.9 | 0.17 | 0.15 | 140 | 84 | 60.0 | 510 |
| Ex. 1-11 | LiMn_{0.5}Ni_{0.5}O₂ | 1.5 | 5 | 0.9 | 0.17 | 0.15 | 140 | 85 | 60.7 | 470 |
| Com. Ex. 1-1 | LiMn_{0.95}Ni_{0.05}O₂ | 0.6 | 20 | 0.6 | 0.20 | 0.17 | 160 | 50 | 31.3 | 300 |
| Com. Ex. 1-2 | Li_{1.05}Mn_{1.95}O₄ | 0.4 | 10 | 0.7 | 0.17 | 0.12 | 118 | 90 | 76.3 | 350 |
| Com. Ex. 1-3 | LiMn_{0.5}Ni_{0.5}O₂ | 2.0 | 3 | 0.9 | 0.17 | 0.17 | 140 | 87 | 62.1 | 250 |
| Com. Ex. 1-4 | LiMn_{0.5}Ni_{0.5}O₂ | 2.0 | 5 | 0.4 | 0.21 | 0.18 | 110 | 70 | 63.6 | 250 |
| Com. Ex. 1-5 | LiMn_{0.5}Ni_{0.5}O₂ | 0.2 | 5 | 0.9 | 0.19 | 0.14 | 140 | 87 | 62.1 | 250 |
| Com. Ex. 1-6 | LiMn_{0.5}Ni_{0.5}O₂ | 0.2 | 30 | 0.9 | 0.12 | 0.10 | 120 | 72 | 60.0 | 480 |

**Table 2**

| | Positive active material | | | | | | Battery performance | | | |
|---|---|---|---|---|---|---|---|---|---|---|
| Battery | Composition | Specific surface area (g/m²) | Average particle diameter (µm) | Peak intensity ratio | Half width 18.6° | Half width 44.1° | 1.5 A discharge capacity (mAh/g) | 30 A discharge capacity (mAh/g) | High-rate discharge performance value (%) | Cycle life |
| Ex. 2-1 | LiMn_{0.475}Ni_{0.475}B_{0.05}O₂ | 0.9 | 9 | 0.9 | 0.16 | 0.10 | 137 | 89 | 65.0 | 350 |
| Ex. 2-2 | LiMn_{0.475}Ni_{0.475}V_{0.05}O₂ | 0.9 | 9 | 0.9 | 0.17 | 0.17 | 130 | 87 | 66.9 | 350 |
| Ex. 2-3 | LiMn_{0.475}Ni_{0.475}Al_{0.05}O₂ | 0.9 | 9 | 1.0 | 0.16 | 0.11 | 129 | 89 | 69.0 | 350 |
| Ex. 2-4 | LiMn_{0.475}Ni_{0.475}Mg_{0.05}O₂ | 0.9 | 9 | 1.1 | 0.16 | 0.12 | 132 | 89 | 67.4 | 350 |
| Ex. 2-5 | LiMn_{0.475}Ni_{0.475}Co_{0.05}O₂ | 0.9 | 9 | 1.0 | 0.16 | 0.14 | 128 | 88 | 68.8 | 350 |
| Ex. 2-6 | LiMn_{0.475}Ni_{0.475}Cr_{0.05}O₂ | 0.9 | 9 | 0.9 | 0.17 | 0.17 | 128 | 84 | 65.6 | 350 |
| Ex. 2-7 | LiMn_{0.475}Ni_{0.475}Ti_{0.05}O₂ | 0.9 | 9 | 0.9 | 0.16 | 0.17 | 129 | 87 | 67.4 | 350 |
| Ex. 2-8 | LiMn_{0.475}Ni_{0.475}Fe_{0.05}O₂ | 0.9 | 9 | 0.9 | 0.16 | 0.13 | 128 | 85 | 66.4 | 350 |
| Ex. 2-9 | LiMn_{0.475}Ni_{0.475}Cu_{0.05}O₂ | 0.9 | 9 | 0.9 | 0.16 | 0.14 | 127 | 83 | 65.4 | 350 |
| Ex. 2-10 | LiMn_{0.475}Ni_{0.475}Zn_{0.05}O₂ | 0.9 | 9 | 0.9 | 0.17 | 0.13 | 128 | 84 | 65.6 | 350 |
| Com. Ex. 2-1 | LiMn_{0.475}Ni_{0.475}Mg_{0.05}O₂ | 0.2 | 15 | 1.1 | 0.17 | 0.11 | 95 | 40 | 42.1 | 300 |
| Com. Ex. 2-2 | LiMn_{0.475}Ni_{0.475}Mg_{0.05}O₂ | 1.9 | 6 | 1.1 | 0.16 | 0.10 | 130 | 90 | 69.2 | 150 |

**Table 3**

| | Positive active material | | | | | | Battery performance | | | |
|---|---|---|---|---|---|---|---|---|---|---|
| Battery | Composition | Specific surface area (g/m²) | Average particle diameter (µm) | Peak intensity ratio | Half width 18.6° | Half width 44.1° | 1.5 A discharge capacity (mAh/g) | 30 A discharge capacity (mAh/g) | High-rate discharge performance value (%) | Cycle life |
| Ex. 3-1 | LiMn_{0.475}Ni_{0.475}B_{0.05}O₂ | 1.0 | 9 | 1.0 | 0.15 | 0.12 | 137 | 89 | 65.0 | 600 |
| Ex. 3-2 | LiMn_{0.475}Ni_{0.474}V_{0.05}B_{0.001}O₂ | 1.0 | 9 | 1.0 | 0.14 | 0.11 | 130 | 90 | 69.2 | 550 |
| Ex. 3-3 | LiMn_{0.475}Ni_{0.474}Al_{0.005}B_{0.001}O₂ | 1.0 | 9 | 1.0 | 0.13 | 0.11 | 129 | 92 | 71.3 | 600 |
| Ex. 3-4 | LiMn_{0.475}Ni_{0.474}Mg_{0.05}B_{0.001}O₂ | 1.0 | 9 | 1.0 | 0.13 | 0.11 | 132 | 92 | 69.7 | 650 |
| Ex. 3-5 | LiMn_{0.475}Ni_{0.474}CO_{0.05}B_{0.001}O₂ | 1.0 | 9 | 1.0 | 0.13 | 0.11 | 131 | 93 | 71.0 | 700 |
| Ex. 3-6 | LiMn_{0.475}Ni_{0.474}Cr_{0.05}B_{0.001}O₂ | 1.0 | 9 | 1.0 | 0.14 | 0.11 | 128 | 87 | 68.0 | 650 |
| Ex. 3-7 | LiMn_{0.475}Ni_{0.474}Ti_{0.05}B_{0.001}O₂ | 1.0 | 9 | 1.0 | 0.16 | 0.14 | 129 | 90 | 69.8 | 500 |
| Ex. 3-8 | LiMn_{0.475}Ni_{0.474}Fe_{0.05}B_{0.001}O₂ | 1.0 | 9 | 1.0 | 0.16 | 0.14 | 125 | 86 | 68.8 | 480 |
| Ex. 3-9 | LiMn_{0.475}Ni_{0.474}Cu_{0.01}B_{0.001}O₂ | 1.0 | 9 | 1.0 | 0.15 | 0.13 | 127 | 85 | 66.9 | 500 |
| Ex. 3-10 | LiMn_{0.475}Ni_{0.474}Zn_{0.05}B_{0.001}O₂ | 1.0 | 10 | 1.0 | 0.16 | 0.15 | 130 | 93 | 71.5 | 510 |
| Com. Ex. 3-1 | LiMn_{0.475}Ni_{0.475}B_{0.05}O₂ | 0.2 | 9 | 1.1 | 0.18 | 0.23 | 110 | 70 | 63.6 | 470 |
| Com. Ex. 3-2 | LiMn_{0.475}Ni_{0.475}B_{0.05}O₂ | 2.4 | 4 | 1.1 | 0.17 | 0.21 | 132 | 95 | 72.0 | 200 |

**Table 4**

| | Positive active material | | | | | | Battery performance | | | |
|---|---|---|---|---|---|---|---|---|---|---|
| Battery | Composition | Specific surface area (g/m²) | Average particle diameter (µm) | Peak intensity ratio | Half width 18.6° | Half width 44.1° | 1.5 A discharge capacity (mAh/g) | 30 A discharge capacity (mAh/g) | High-rate discharge performance value (%) | Cycle life |
| Ex. 4-1 | LiMn_{0.45}Ni_{0.45}Co_{0.1}O₂ | 0.9 | 20 | 1.0 | 0.19 | 0.12 | 160 | 113 | 70.6 | 700 |
| Ex. 4-2 | LiMn_{0.4}Ni_{0.4}Co_{0.2}O₂ | 0.9 | 20 | 1.0 | 0.19 | 0.11 | 165 | 120 | 72.7 | 750 |
| Ex. 4-3 | LiMn_{0.45}Ni_{0.45}Co_{0.1}O₂ | 0.3 | 20 | 1.0 | 0.15 | 0.14 | 160 | 112 | 70.0 | 600 |
| Ex. 4-4 | LiMn_{0.45}Ni_{0.45}Co_{0.1}O₂ | 1.5 | 5 | 1.0 | 0.19 | 0.10 | 160 | 114 | 71.3 | 700 |
| Com. Ex. 4-1 | LiMn_{0.35}Ni_{0.55}Co_{0.1}O₂ | 1.0 | 20 | 1.0 | 0.17 | 0.13 | 160 | 115 | 71.9 | 400 |
| Com. Ex. 4-2 | LiMn_{0.45}Ni_{0.45}Co_{0.1}O₂ | 0.3 | 5 | 1.0 | 0.20 | 0.10 | 160 | 94 | 58.8 | 300 |
| Com. Ex. 4-3 | LiMn_{0.45}Ni_{0.45}Co_{0.1}O₂ | 2.0 | 5 | 0.5 | 0.07 | 0.02 | 160 | 120 | 75.0 | 350 |
| Ex. 4-5 | LiMn_{0.425}Ni_{0.425}Co_{0.1}B_{0.05}O₂ | 1.0 | 9 | 1.0 | 0.18 | 0.14 | 157 | 118 | 75.2 | 700 |
| Ex. 4-6 | LiMn_{0.425}Ni_{0.425}Co_{0.01}V_{0.05}O₂ | 1.0 | 9 | 0.9 | 0.19 | 0.12 | 150 | 111 | 74.0 | 600 |
| Ex. 4-7 | LiMn_{0.425}Ni_{0.425}Co_{0.1}Al_{0.05}O₂ | 1.0 | 9 | 1.0 | 0.19 | 0.13 | 155 | 113 | 72.9 | 700 |
| Ex. 4-8 | LiMn_{0.425}Ni_{0.425}Co_{0.1}Mg_{0.05}O₂ | 1.0 | 9 | 1.0 | 0.19 | 0.13 | 152 | 114 | 75.0 | 700 |
| Ex. 4-9 | LiMn_{0.425}Ni_{0.425}Co_{0.1}Cr_{0.05}O₂ | 1.0 | 9 | 1.0 | 0.19 | 0.14 | 152 | 114 | 75.0 | 650 |
| Ex. 4-10 | LiMn_{0.425}Ni_{0.425}Co_{0.1}Ti_{0.05}O₂ | 1.0 | 9 | 1.0 | 0.19 | 0.15 | 154 | 112 | 72.7 | 650 |
| Ex. 4-11 | LiMn_{0.425}Ni_{0.425}Co_{0.1}Fe_{0.05}O₂ | 0.9 | 9 | 0.9 | 0.19 | 0.11 | 150 | 109 | 72.7 | 650 |
| Ex. 4-12 | LiMn_{0.425}Ni_{0.425}Co_{0.1}Cu_{0.05}O₂ | 0.9 | 9 | 1.0 | 0.20 | 0.10 | 151 | 115 | 76.2 | 620 |
| Ex. 4-13 | LiMn_{0.425}Ni_{0.425}Co_{0.1}Zn_{0.05}O₂ | 0.9 | 9 | 1.0 | 0.19 | 0.12 | 153 | 120 | 78.4 | 650 |

Furthermore, the changes in discharge voltage of the battery of (Example 1-1) in discharge at 1.5 A (0.1 It) are shown in Fig. 6; the changes in discharge voltage of the battery of (Example 1-10) in discharge at 1.5 A (0.1 It) are shown in Fig. 7; and the changes in discharge voltage of the battery of (Example 4-1) in discharge at 1.5 A (0.1 It) are shown in Fig. 8.

### (With Respect to First Embodiment)

A comparison between the batteries of (Example 1-1) to (Example 1-11), which employed positive active materials having a layer structure akin to the space group R3/m, and the battery of (Comparative Example 1-1), which employed a positive active material having a layer structure belonging to the space group C2/m, shows that high-rate discharge characteristics have been greatly improved. A comparison among the batteries of (Example 1-1) to (Example 1-11) and (Comparative Example 1-3) to (Comparative Example 1-6), which employed LiMn_{0.5}Ni_{0.5}O₂ as a positive active material having a layer structure akin to the space group R3/m, shows that the high-rate discharge characteristics are remarkably improved by regulating the value of specific surface area to 0.3 m²/g or larger. On the other hand, it can be seen that when the value of specific surface area exceeds 1.5 m²/g, the charge/discharge cycle performance decreases abruptly. Consequently, when LiMn_{0.5}Ni_{0.5}O₂ having a specific surface area of from 0.3 m²/g to 1.5 m²/g is used as a positive active material, then a secondary battery combining a satisfactory cycle life and high high-rate discharge characteristics can be provided.

Furthermore, a comparison in battery performance among the batteries which likewise employed a composite oxide represented by LiMn_{0.5}Ni_{0.5}O₂ and differed in the ratio of the relative intensity of the diffraction peak at 2θ=49.1±1° to that of the diffraction peak at 2θ=18.6±1° in a diffraction pattern obtained by X-ray powder diffractometry with CuK_{α} ray shows that the cycle life greatly improves when that relative-intensity ratio is 0.6 or higher. It can also be seen that when that relative-intensity ratio exceeds 1.1, the value of high-rate discharge characteristics tends to decrease. Consequently, when that relative-intensity ratio is regulated to a value of from 0.6 to 1.1, then a battery combining, in particular, a satisfactory cycle life and high high-rate discharge characteristics can be provided.

It can be further seen that satisfactory high-rate discharge characteristics are obtained when the half width of the diffraction peak appearing at 2θ=18.6±1° is 0.13° or larger and the half width of the diffraction peak appearing at 2θ=44.1±1° is 0.10° or larger. It can be furthermore seen that the cycle life tends to decrease when the half width of the diffraction peak appearing at 2θ=18.6±1° is larger than 0.20° and the half width of the diffraction peak appearing at 2θ=44.1±1° is larger than 0.17°. Consequently, a battery combining, in particular, a satisfactory cycle life and high high-rate discharge characteristics can be provided when the half width of the diffraction peak appearing at 2θ=18.6±1° is from 0.13 to 0.20° and the half width of the diffraction peak appearing at 2θ=44.1±1° is from 0.10 to 0.17°.

Incidentally, the battery of (Comparative Example 1-2) employs a spinel manganese as the main positive active material having relatively satisfactory high-rate discharge characteristics. In this battery, the high-rate discharge performance as expected from the spinel manganese is obtained. It was thus ascertained that in the Examples and Comparative Examples, the discharge characteristics are not governed by constituent elements other than the positive electrode, such as the electrolyte and the negative electrode.

### (With Respect to Second Embodiment)

It can be seen that the batteries of (Example 2-1) to (Example 2-7), in which part of the manganese and nickel contained in LiMn_{0.5}Ni_{0.5}O₂ have been displaced by an element of a different kind, have a greatly improved value of high-rate discharge characteristics as compared with the battery of (Example 1-2), which employs a positive active material having similar properties. Although this effect has not been fully elucidated, it is thought that the displacement by a small amount of an element other than nickel and manganese serves to improve the movement of lithium ions.

Furthermore, in the second embodiment, the battery of (Comparative Example 2-1), in which the value of specific surface area was below 0.3 m²/g, showed an insufficient value of high-rate discharge performance. On the other hand, the battery of (Comparative Example 2-2), in which the value of specific surface area was larger than 1.5 m²/g, was found to have considerably reduced charge/discharge cycle performance.

### (With Respect to Third Embodiment)

The battery of (Example 3-1) has higher high-rate discharge characteristics than the batteries of (Example 1-1) to (Example 1-11). The effect of element displacement by boron is thus observed.

It can be seen that the batteries of (Example 3-2) to (Example 3-7), in which the manganese and nickel in LiMn_{0.5}Ni_{0.5}O₂ have been partly displaced by boron and another element, can have further improved high-rate discharge performance. It is thought that the displacement by a small amount of an element other than nickel and manganese serves to improve the movement of lithium ions.

Furthermore, in the third embodiment, the battery of (Comparative Example 3-1), in which the value of specific surface area was below 0.3 m²/g, showed an insufficient value of high-rate discharge performance. On the other hand, the battery of (Comparative Example 3-2), in which the value of specific surface area was larger than 1.5 m²/g, was found to have considerably reduced charge/discharge cycle performance.

Incidentally, as shown in Fig. 1, when the time period of etching by X-ray photoelectron spectroscopy (XPS) has reached about 400 seconds, the boron concentration has decreased to almost the same level as in inner parts of the particle. The rate of this etching in the depth direction is 0.07 nm (per second). It can be seen from this that a surface layer thickness as small as 28 nm (=0.028 µm) suffices for the positive active material particles to bring about the effects of the invention. In the case where the average particle diameter of the positive active material is from 9 to 10 µm, that thickness corresponds to about 2% of the particle diameter.

### (With Respect to Fourth Embodiment)

The batteries of (Example 4-1) to (Example 4-4), in each of which the positive active material was a composite oxide represented by Li[MnₓNi_{y}Co_{z}]O₂ as a composite oxide represented by LiMn_{0.5}Ni_{0.5}O₂ containing a cobalt ingredient added thereto, each had a far higher discharge capacity than the batteries of (Example 1-1) to (Example 1-11). In addition, these batteries had a greatly improved cycle life probably because of the stabilized crystal structure.

A comparison in battery performance among (Example 4-1), (Example 4-3), (Example 4-4), (Comparative Example 4-2), and (Comparative Example 4-3), which respectively employed composite oxides represented by the same formula LiMn_{0.45}Ni_{0.45}Co_{0.1}O₂ and differing in specific surface area as the positive active materials, shows that the cycle performance decreases abruptly as the specific surface area increases beyond 1.5 m²/g. The comparison further shows that the high-rate discharge performance abruptly becomes poor as the specific surface area decreases to below 0.3 m²/g. Consequently, by regulating the specific surface area of the composite oxide to a value of from 0.3 m²/g to 1.5 m²/g, a non-aqueous electrolyte secondary battery can be provided which combines satisfactory cycle performance and high high-rate discharge performance.

It can be seen that the batteries of (Example 4-5) to (Example 4-10), in each of which the positive active material was a composite oxide represented by the empirical formula LiMn_{0.425}Ni_{0.425}Co_{0.1}M"_{0.05}O₂ containing an element M" of a kind different from nickel, manganese, and cobalt, each had better high-rate discharge performance than the battery of (Example 4-1), in which an element M" of a different kind had not been added. Although this effect has not been fully elucidated, it is thought that the displacement by a small amount of an element other than nickel and manganese serves to improve the movement of lithium ions.

Incidentally, the batteries of Example 2-1, Example 3-1, and Example 4-7, to which boron had been added, were disassembled, and the elements constituting each battery were subjected to elemental analysis. As a result, boron was detected around the surface of each negative electrode. It is thought from this that the boron added during synthesis produces the effect of dissolving away from the positive active material particles to change the surface state of the positive electrode into an active state and thereby improve high-rate discharge performance, rather than produces the effect of stabilizing the structure by displacing manganese and nickel.

In the Examples of the second embodiment, use of Li[Mn_{0.475}Ni_{0.475}B₀₋₀₅₀O₂], Li[Mn_{0.475}Ni_{0.475}V_{0.05}O₂], Li[Mn_{0.475}Ni_{0.475}Al_{0.05}O₂], Li[Mn_{0.475}Ni_{0.475}Mg_{0.05}O₂], Li[Mn_{0.475}Ni_{0.475}Co_{0.05}O₂], Li[Mn_{0.475}Ni_{0.475}Cr_{0.05}O₂], Li[Mn_{0.475}Ni_{0.475}Ti_{0.05}O₂], and Li[Mn_{0.475}Ni_{0.475}Li_{0.05}O₂] as the main component of the positive active material was described. However, it was ascertained that use of other elements M of different kinds produces the same effects.

In the Examples of the third embodiment, use of Li[Mn_{0.475}Ni_{0.475}B_{0.05}O₂], Li[Mn_{0.475}Ni_{0.475}B_{0.05}O₂] having a high surface boron concentration, Li[Mn_{0.475}Ni_{0.474}V_{0.05}B_{0.001}O₂] Li[Mn_{0.475}Ni_{0.474}V_{0.05}Al_{0.001}O₂], Li[Mn_{0.475}Ni₀.₄₇₄V_{0.05}Mg_{0.001}O₂], Li[Mn_{0.475}Ni_{0.47}V_{0.05}Co_{0.001}O₂], Li[Mn_{0.475}Ni_{0.474}Cr_{0.05}B_{0.001}O₂], and Li[Mn_{0.475}Ni_{0.474}Ti_{0.05}B_{0.001}O₂] as the main component of the positive active material was described. However, it was ascertained that use of other elements M' of different kinds produces the same effects.

In the Examples of the fourth embodiment, use of Li[Mn_{0.45}Ni_{0.45}Co_{0.1}O₂], Li[Mn_{0.425}Ni_{0.425}Co_{0.1}B_{0.05}O₂], Li[Mn_{0.425}Ni_{0.425}Co_{0.1}V_{0.05}O₂], Li[Mn_{0.425}Ni_{0.425}Co_{0.1}Al_{0.50}O₂], Li[Mn_{0.425}Ni_{0.425}Co_{0.1}Mg_{0.05}O₂], Li[Mn_{0.425}Ni_{0.425}CO_{0.1}Cr_{0.05}O₂], Li[Mn_{0.425}Ni_{0.425}Co_{0.1}Ti_{0.05}O₂], and Li[Mn_{0.425}Ni_{0.425}CO_{0.1}Li_{0.05}O₂] as the main component of the positive active material was described. However, it was ascertained that use of other elements produces the same effects.

Although the Examples given above described non-aqueous electrolyte secondary batteries employing artificial graphite as the negative-electrode material, it was ascertained that the same effects were brought about with other negative-electrode materials.

The invention should not be construed as being limited by the starting materials for active materials, production methods, positive electrodes, negative electrode, electrolyte, separator, battery shape, and the like described in those Examples.

### <Industrial Applicability>

The invention, which has been achieved in order to eliminate the problems described above, can provide a non-aqueous electrolyte secondary battery which is excellent in high-rate charge/discharge performance and charge/discharge cycle performance and has a high energy density.

## Claims

1. A positive active material comprising an Li-Mn-Ni composite oxide as the main component, wherein the composite oxide is either represented by the following general formula:
Li_{1-z}[Mn_{0.5-x-y}Ni_{0.5-x'-y}M_{x+x'}Li_{y+y'}O₂]
(wherein M is one or more element selected from the group consisting of B, Mg, Al, Ti, V, Cr, Fe, Co, Cu, and Zn;
x = 0.001 to 0.1;
x' = 0.001 to 0.1;
0 ≦ y ≦ 0.1;
0 ≦ y' ≦ 0.1;
x + x' + y + y' ≦ 0.4; and
0 ≦ z < 1),
or represented by the following general formula:
Li[Mn_{c}Ni_{d}Co_{c}LiₐM"_{b}]O₂
(wherein M" is one or more element selected from the group consisting of B, Mg, Al, Ti, V, Cr, Fe, Cu, and Zn;
d ≦ c + e + a + b;
c + d + e + a + b = 1;
0 ≦ a ≦ 0.05;
0 ≦ b ≦ 0.05;
0.2 ≦ c ≦ 0.5; and
0.02 ≦ e ≦ 0.4),
wherein in both cases the composite oxide gives a diffraction pattern in which the half width of the direction peak at 2θ = 18.6±1° is from 0.13° to 0.20° and the half width of the diffraction peak at 2θ = 44.1±1° is from 0.10° to 0.17° in X-ray powder diffractometry with CuKα ray, and the composite oxide has a specific surface area as measured by the BET method of from 0.3 m²/g to 1.5 m²/g.

2. The positive active material of claim 1, wherein
0.01 ≦ x ;
0.01 ≦ x'; and
x + x' + y + y' ≦ 0.2.

3. The positive active material of claim 1 or 2, wherein M includes B and one or more members selected from the group consisting of Mg, Al, Ti, V, Cr, Fe, Co. Cu, and Zn.

4. The positive active material of any one of claims 1 to 3, wherein said composite oxide has a layer crystal structure which, in X-ray powder diffractometry with CuK_{α} ray, gives a diffraction pattern having peaks at 2θ's of 18.6±1°, 36.6±1°, 37.8±1°, 38.2±1°, 44.1±1°, 48.4±1°, 58.4±1°, 64.2±1°, 64.8±1°, and 68.8±1°.

5. The positive active material of any one of claims 1 to 4, wherein said composite oxide, in X-ray powder diffractometry with CuK_{α} ray, gives a diffraction pattern in which the ratio of the relative intensity of the diffraction peak at 2θ=44.1±1° to the relative intensity of the diffraction peak at 2θ = 18.6±1° is from 0.6 to 1.1.

6. The positive active material of any one of claims 1 to 5, wherein said composite oxide has a layer structure attributed to the space group R3/m.

7. The positive active material of any one of claims 1 to 6, wherein said composite oxide has a particle diameter of from 3 µm to 20 µm.

8. A non-aqueous electrolyte secondary battery which uses the positive active material of any one of claims 1 to 7.

## Patentansprüche

1. Positives Aktivmaterial umfassend ein Li-Mn-Ni-Verbundoxid als die Hauptkomponente, wobei das Verbundoxid entweder durch die folgende allgemeine Formel wiedergegeben ist:
Li_{1-z}[Mn_{0,5-x-y}Ni_{0,5-x'-y'}M_{x+x'}Li_{y+y'}O₂]
(wobei M ein oder mehrere Elemente, ausgewählt aus der Gruppe bestehend aus B, Mg, Al, Ti, V, Cr, Fe, Co, Cu und Zn, ist;
x = 0,001 bis 0, 1;
x' = 0,001 bis 0,1;
0 ≦ y ≦ 0,1;
0 ≦ y' ≦ 0,1;
x + x' + y + y' ≦ 0,4; und
0 ≦ z < 1),
oder durch die folgende allgemeine Formel wiedergegeben ist:
Li[Mn_{c}Ni_{d}CoₑLiₐM"_{b}]O₂
(wobei M" ein oder mehrere Elemente, ausgewählt aus der Gruppe bestehend aus B, Mg, Al, Ti, V, Cr, Fe, Cu und Zn, ist;
d ≦ c + e + a + b;
c + d + e + a + b = 1;
0 ≦ a 0,05;
0 ≦ b ≦ 0,05;
0,2 ≦ c ≦ 0,5; und
0,02 ≦ e ≦ 0,4),
wobei in beiden Fällen das Verbundoxid bei einer Röntgenpulverdiffraktometrie mit CuK_{α}-Strahlung ein Beugungsdiagramm ergibt, in welchem die Halbwertsbreite des Beugungspeaks bei 2θ = 18,6±1° von 0,13° bis 0,20° beträgt und die Halbwertsbreite des Beugungspeaks bei 2θ = 44,1±1° von 0,10° bis 0,17° beträgt, und das Verbundoxid eine spezifische Oberfläche, gemessen durch das BET-Verfahren, von 0,3 m²/g bis 1,5 m²/g aufweist.

2. Positives Aktivmaterial nach Anspruch 1, wobei
0,01 ≦ x;
0,01 ≦ x'; und
x + x' + y + y' ≦ 0,2.

3. Positives Aktivmaterial nach Anspruch 1 oder 2, wobei M B und eines oder mehrere Mitglieder, ausgewählt aus der Gruppe bestehend aus Mg, Al, Ti, V, Cr, Fe, Co, Cu und Zn, einschließt.

4. Positives Aktivmaterial nach einem der Ansprüche 1 bis 3, wobei das Verbundoxid eine Schichtkristallstruktur aufweist, welche bei der Röntgenpulverdiffraktometrie mit CuK_{α}-Strahlung ein Beugungsdiagramm mit Peaks bei 2θ's von 18,6±1°, 36,6±1°, 37,8±1°. 38,2±1°, 44.1±1°, 48.4±1°, 58,4±1°, 64,2±1°, 64,8±1° und 68,8±1° ergibt.

5. Positives Aktivmaterial nach einem der Ansprüche 1 bis 4, wobei das Verbundoxid bei einer Röntgenpulverdiffraktometrie mit CuK_{α}-Strahlung ein Beugungsdiagramm ergibt, in welchem das Verhältnis der relativen Intensität des Beugungspeaks bei 2θ = 44,1±1° zu der relativen Intensität des Beugungspeaks bei 2θ = 18,6±1° von 0,6 bis 1,1 beträgt.

6. Positives Aktivmaterial nach einem der Ansprüche 1 bis 5, wobei das Verbundoxid eine Schichtstruktur aufweist, die der Raumgruppe R3/m zugeschrieben wird.

7. Positives Aktivmaterial nach einem der Ansprüche 1 bis 6, wobei das Verbundoxid einen Teilchendurchmesser von 3 µm bis 20 µm aufweist.

8. Sekundärbatterie mit nicht-wässrigem Elektrolyt, welche das positive Aktivmaterial nach einem der Ansprüche 1 bis 7 verwendet.

## Revendications

1. Matière active positive comprenant un oxyde composite de Li-Mn-Ni comme le constituant principal, dans laquelle l'oxyde composite est soit représenté par la formule générale :
Li_{1-z}[Mn_{0,5-x-y}Ni_{0,5-x'-y'}M_{x+x'}Li_{y+y'}O₂]
(où M est un ou plusieurs éléments choisis dans le groupe constitué de B, Mg, Al, Ti, V, Cr, Fe, Co, Cu et Zn ;
x = 0,001 à 0,1;
x' = 0,001 à 0,1;
0 ≦ y ≦ 0,1;
0 ≦ y' ≦ 0,1 ;
x + x' + y + y' ≦ 0,4 ; et
0 ≦ z < 1),
soit représenté par la formule générale suivante :
Li[Mn_{c}Ni_{d}Co_{c}LiₐM"_{b}]O₂
(où M" est un ou plusieurs éléments choisis dans le groupe constitué de B, Mg, Al, Ti, V, Cr, Fe, Cu, et Zn ;
d ≦ c + e + a +b ;
c + d + e + a + b = 1 ;
0 ≦ a ≦ 0,05 ;
0 ≦ b ≦ 0,05 ;
0,2 ≦ c ≦ 0,5 ; et
0,02 ≦ e ≦ 0,4),
dans lequel dans les deux cas l'oxyde composite fournit un motif de diffraction dans lequel la demi-largeur du pic de diffraction à 2θ = 18,1 ± 1° est de 0,13° à 0,20° et la demi-largeur du pic de diffraction à 2θ = 44,1 ± 1° est de 0,10° à 0,17° dans une diffraction de poudre aux rayons X avec un rayon CuK_{α}, et l'oxyde composite présente une surface spécifique comme mesurée par le procédé BET de 0,3 m²/g à 1,5 m²/g.

2. Matière active positive selon la revendication 1, dans laquelle
0,01 ≦ x ;
0,01 ≦ x' ; et
x + x' + y + y' ≦ 0,2.

3. Matière active positive selon la revendication 1 ou 2, dans laquelle M comprend B et un ou plusieurs éléments choisis dans le groupe constitué de Mg, Al, Ti, V, Cr, Fe, Co, Cu, et Zn.

4. Matière active positive selon l'une quelconque des revendications 1 à 3, dans laquelle ledit oxyde composite présente une structure cristalline de couche laquelle, dans une diffractométrie de poudre aux rayons X avec un rayon CuK_{α}, fournit un motif de diffraction présentant des pics à 2θ' de 18,6 ± 1°, 36,6 ± 1°, 37,8 ± 1°, 38,2 ± 1°, 44,1 ± 1°, 48,4 ± 1°, 58,4 ± 1°, 64,2 ± 1°, 64,8 ± 1°, et 68,8 ± 1°.

5. Matière active positive selon l'une quelconque des revendications 1 à 4, dans laquelle ledit oxyde composite, dans une diffractométrie de poudre aux rayons X avec un rayon CuK_{α}, fournit un motif de diffraction dans lequel le rapport de l'intensité relative du pic de diffraction à 2θ = 44,1 ± 1° à l'intensité relative du pic de diffraction à 2θ = 18,6 + 1° est de 0,6 à 1,1.

6. Matière active positive selon l'une quelconque des revendications 1 à 5, dans laquelle ledit oxyde composite présente une structure de couche attribuée au groupe spatial R3/m.

7. Matière active positive selon l'une quelconque des revendications 1 à 6, dans laquelle ledit oxyde composite présente un diamètre de particule de 3 µm à 20 µm.

8. Accumulateur secondaire à électrolyte non aqueux qui utilise la matière active positive selon l'une quelconque des revendications 1 à 7.
